(19)

**Europäisches Patentamt**
**European Patent Office**
**Office européen des brevets**

(11)  **EP 4 391 832 B1**

(12)  **EUROPEAN PATENT SPECIFICATION**

(45) Date of publication and mention
of the grant of the patent:
**08.07.2026   Bulletin 2026/28**

(21) Application number: **22878055.7**

(22) Date of filing: **06.10.2022**

(51) International Patent Classification (IPC):
*A23L 2/60* *(2006.01)*       *A23L 27/30* *(2016.01)*
*A23L 27/00* *(2016.01)*      *C13B 50/00* *(2011.01)*
*A21D 2/18* *(2006.01)*       *A21D 13/062* *(2017.01)*
*A23L 2/66* *(2006.01)*       *A23L 29/30* *(2016.01)*

(52) Cooperative Patent Classification (CPC):
**A23L 2/60; A21D 2/181; A21D 13/062; A23L 2/66;**
**A23L 27/34; A23L 29/30**

(86) International application number:
**PCT/IB2022/059568**

(87) International publication number:
**WO 2023/057956 (13.04.2023 Gazette 2023/15)**

(54) **SWEETENER FORMULATIONS**

*SÜSSSTOFFFORMULIERUNGEN*

*FORMULATIONS D'ÉDULCORANT*

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **06.10.2021   US 202163262172 P**
**07.10.2021   US 202163253133 P**
**05.01.2022   PCT/IB2022/050065**
**05.08.2022   PCT/IB2022/057310**

(43) Date of publication of application:
**03.07.2024   Bulletin 2024/27**

(73) Proprietor: **Incredo LTD**
**Ness Ziona 7403648 (IL)**

(72) Inventors:
• **TSIVION, David**
**4691000 Kfar Shmaryahu (IL)**

• **BITAN, Liron**
**6080705 Shoham (IL)**
• **LAHAV, Naama**
**4528456 Hod Hasharon (IL)**
• **TRACHTENBERG, Alexander**
**5257509 Ramat Gan (IL)**
• **FATTAL, Moran**
**6940091 Tel Aviv (IL)**

(74) Representative: **Harrison IP Limited**
**Mereside, Alderley Park**
**Congleton Road**
**Nether Alderley**
**Macclesfield, Cheshire SK10 4TG (GB)**

(56) References cited:
**WO-A1-2020/182687       AU-A1- 2005 294 654**
**CN-A- 110 662 428       US-A1- 2008 213 452**
**US-A1- 2019 021 381       US-A1- 2019 021 381**
**US-A1- 2019 343 155       US-A1- 2019 343 155**

**Description**

This application draws priority from US Patent Application No. 63/253,133, filed October 7, 2021, from US Patent Application No. 63/262,172, filed October 6, 2021, from US Patent Application No. 63/316,015, filed March 3, 2022, from PCT Patent Application No. PCT/IB2022/050065, filed on January 5, 2022, and from PCT Patent Application No. PCT/IB2022/057310, filed on August 5, 2022.

FIELD AND BACKGROUND OF THE INVENTION

The present invention relates to sweet formulations and, more particularly, to edible formulations including one or more vegetable proteins disposed in the sweetener particles.
US 2019/343155 it discloses a sweetener composition comprising a sweetener selected from a carbohydrate sweetener and a polyol sweetener.
US 2019/021381 it discloses a sweetener formulation wherein the sweetener compositions can be formulated as particles, selected from the group of carbohydrate sweetener and/or sweetener polyol.
US 2008/213452 A1 it discloses a sweetener composition comprising: about 15 to about 65 composition weight percent natural cane sugar (sucrose); about 15 to about 45 composition weight percent polyol; about 1 to about 30 composition weight percent of a blend of oligofructose, fructose, vegetable protein isolate, and natural flavours; about 10 to about 35 composition weight percent isomaltulose; and about 1 to about 10 composition weight percent calcium.
WO2020182687 discloses a coated bulking agent particle comprising from 2 wt% to 70 wt% bulking agent and from 30 wt % to 98 wt% coating composition comprising sugar and surface active agent; wherein the ratio of sugar to surface active agent in the composition is from 2000:1 to 4:1 and from 50 wt% to 100 wt % of the sugar is in crystalline form; wherein the bulking agent is coated with the coating composition.

SUMMARY OF THE INVENTION

According to aspects of the invention there is provided an edible formulation including: (a) sweetener particles containing at least one of a sweetener carbohydrate and a sweetener polyol; and (b) a first protein disposed within the sweetener particles, the first protein including a vegetable protein; wherein a weight-to-weight ratio of the first protein to the sweetener within the sweetener particles is within a range of 0.02% to 0.7%; and wherein the sweetener within the sweetener particles is predominantly crystalline.
According to further aspects of the invention there is provided a food formulation containing the edible formulation; and additionally containing (b) a fat; (c) optionally, a starch; and (d) optionally, an edible filler; wherein a weight content of said first protein within the food formulation, on a dry basis, is within a range of 0.01% to 0.5%.
Further aspects are provided hereinbelow.

DESCRIPTION OF THE PREFERRED EMBODIMENTS

The present disclosure describes improved sweetener formulations (or "edible" formulations) and methods for making such improved sweetener formulations and utilizing them in food products. Such sweetener formulations include one or more species of vegetable protein. These sweetener formulations, or the vegetable protein within the formulations, may exhibit any of various mucoadhesive properties.
The inventors have found that the presence of various proteins (such as vegetable proteins) in food may -- disadvantageously -- reduce the perceived sweetness of the food. Without wishing to be bound by theory, the inventors believe that this may be due, at least in part, to the contribution of such vegetable proteins to unpleasant sensory perceptions, e.g., astringency. Consequently, an additional quantity of sweetener (e.g., sucrose or fructose) may need to be introduced to a food to offset the deleterious influence of the vegetable protein on food sweetness, food taste, food mouthfeel, *etc.* This, in turn, may compromise or change various food properties, including textural and baking properties, such that formulation of the food and preparation thereof may require appreciable modification. This phenomenon may be more severe for pea protein isolate relative to the various vegetable protein formulations. In particular, pea proteins may deleteriously impact mouthfeel. Common examples of such vegetable proteins include rice, pea, and chickpea proteins.
The inventors have further discovered that the location of the protein within the food may be of cardinal importance, at least with respect to the sweetness thereof. Specifically, the inventors have discovered when protein such as vegetable protein is incorporated within the sweetener particles, the protein may not negatively impact food sweetness. In fact, the inventors have surprisingly discovered that under certain conditions (e.g., within a particular concentration range of the protein/vegetable protein), the presence of such protein/vegetable protein within the food may actually enhance food sweetness.
Without wishing to be limited by theory, the inventors believe that mucoadhesion of the protein to the mucosa or mucous membranes on the tongue and within the oral cavity may contribute to the retention of sweetener carbohydrates and sweetener polyols, resulting in an enhanced and extended sensation of sweetness. This phenomenon occurs, or is greatly enhanced, when the protein/vegetable protein is incorporated within the sweetener particles, such that the mucosal adhesion between the mucin-containing mucosa and the protein in the sweetener particle helps to fix the sweetener particle to the oral mucosa, or to at least increase the contact time between the sweetener particle to the oral mucosa. This translates into increased activation of the sweetness sensors/receptor sites on the tongue, by way of example.

The inventors have further surprisingly discovered that within a particular, low range of concentrations of proteins such as vegetable proteins disposed within the sweetener particles, the increased mucosal adhesion of the proteins appears to more than offset various properties of the proteins that deleteriously affect taste, including perceived sweetness. These deleterious properties include the increased viscosity of the food (inter alia, reducing the solubility kinetics and hindering the transport of sweetener molecules to the sweetness sensors/receptor sites), covering and blocking oral sweetness sensors/receptor sites, and the non-sweet taste of the protein/vegetable protein. By more than offsetting these deleterious properties, the presence of the these proteins within the sweetener particles may impart appreciably enhanced sweetness to the food.

As will be elaborated hereinbelow, the inventors have surprisingly discovered that while a moderate increase in the mucoadhesivity of the sweetener may result in increased sweetness in the sweetener or in food products utilizing such sweetener, a somewhat higher increase in the mucoadhesivity of the sweetener may counterintuitively result in decreased sweetness in the sweetener or in food products utilizing such sweetener.

As used herein in the specification and in the claims section that follows, the term "mucoadhesive agent" and the like refers to a substance exhibiting an affinity for attaching to a mucin layer of a mucosal surface of a human tongue, via mucoadhesion.

As used herein, the term "sweetener carbohydrate" refers to an edible sweetener having at least one carbohydrate moiety, which carbohydrate is processed within the human body to produce energy. This definition is meant to include sweetener carbohydrates having an energy value of at least 0.1 kcal/g, more typically, at least 0.2 kcal/g, more typically, at least 0.5 kcal/g, and yet more typically, at least 1.0 kcal/g. This definition is specifically meant to include allulose.

The term "sweetener carbohydrate" is specifically meant to exclude high-intensity sweeteners such as sucralose, aspartame, and acesulfame-K.

The term "sweetener", when used alone, is meant to include both sweetener carbohydrates and sweetener polyols.

A sweetener carbohydrate produces a sweet taste when consumed by the typical human consumer. If, on a normalized sweetness scale, on a weight basis, in which sucrose is taken as a standard of 1, maltose is about 0.31, and lactose is about 0.22, the term "sweetener carbohydrate" would apply to lactose, and to any sugar or other nutritive, carbohydrate-containing sweetener having a sweetness within a range of 0.15 to 2.5 on this normalized sweetness scale. Alternatively, it may be stated that the minimum sweetness for the sugar or other nutritive, carbohydrate-containing sweetener would be that of raffinose (which has a sweetness of 0.15 on the above-mentioned scale). More typically, such a sweetener carbohydrate has a sweetness of at least 0.2, at least 0.23, at least 0.25, at least 0.27, or a sweetness within a range of 0.23 to 2.5, 0.25 to 2.5, 0.35 to 2.5, 0.45 to 2.5, 0.25 to 1.8, 0.25 to 1.5, 0.25 to 1.2, 0.25 to 1.05, 0.25 to 1.0, 0.45 to 1.7, 0.15 to 1.7, or 0.35 to 1.5 on this normalized sweetness scale.

It is noted that the relative sweetness of fructose reported in the literature has been reported to be as little as 0.91, and as much as about 1.7. For the avoidance of doubt, the term "sweetener carbohydrate" is meant to include fructose, irrespective of any of its reported relative sweetness values.

As used herein, the term "normalized sweetness scale", refers to a relative sweetness scale, on a weight basis, in which sucrose is assigned a value of 1.00. More specifically, the normalized sweetness scale is determined according to the methods disclosed in Moscowitz, H. "Ratio Scales of Sugar Sweetness"; Perception & Psychophysics, 1970, Vol. 7 (5), in which the power function for the sugars and polyols/sugar alcohols has an exponent of 1.3 (n = 1.3), as disclosed therein in Table 3, and as provided hereinbelow.

From "Ratio Scales of Sugar Sweetness" (Table 3)

|  | Percent by Weight Basis | |
| --- | --- | --- |
|  | Rank | Relative Sweetness |
| Sucrose | 1 | 1.00 |
| Fructose | 2 | 0.91 |

(continued)

|  | Percent by Weight Basis | |
|---|---|---|
|  | Rank | Relative Sweetness |
| Raftinose | 15 | 0.15 |
| Maltose | 12 | 0.31 |
| Lactose | 14 | 0.22 |
| Dulcitol | 5 | 0.46 |
| Glucose | 4 | 0.45 |
| Galactose | 6 | 0.42 |
| Sorbose | 7 | 0.41 |
| Sorbitol | 9 | 0.37 |
| Mannitol | 11 | 0.33 |
| Arabinose | 8 | 0.39 |
| Rhamnose | 10 | 0.35 |
| Glycerol | 3 | 0.50 |
| Xvlose | 13 | 0.26 |

A sweetener carbohydrate may be a monosaccharide or a disaccharide. Examples of sweetener carbohydrates include, but are not limited to, sucrose, glucose, maltose, fructose, lactose, or any combination of sweetener carbohydrates. One or more sweetener carbohydrate may be combined with one or more sweetener polyols. A sweetener carbohydrate may be naturally occurring or synthetically produced.

As used herein, the term "sweetener polyol" refers to a consumable polyol that produces a sweet taste when consumed by the typical human consumer. Non-limiting examples of sweetener polyols include xylitol, maltitol, erythritol, sorbitol, threitol, arabitol, hydrogenated starch hydrolysates (HSH), isomalt, lactitol, mannitol, or galactitol (dulcitol). **In** many instances, the polyol is a sugar alcohol. A sugar alcohol can be produced from a carbohydrate by any known method of reduction (via a chemical or biological transformation) of an acid or aldehyde to an alcohol. **In** other cases, a sweetener polyol can be synthesized from a parent carbohydrate. Alternatively, a sweetener polyol may be obtained from a biological source.

For the avoidance of doubt, the term "sweetener polyol" is meant to include any polyol/sugar alcohol having a sweetness within a range of 0.15 to 2.5 on the above-described normalized sweetness scale. More typically, such a sweetener polyol has a sweetness within a range of 0.15 to 1.5, 0.15 to 1.0, 0.15 to 0.8, 0.15 to 0.7, 0.20 to 0.7, 0.15 to 0.6, or 0.25 to 0.6, on this normalized sweetness scale.

The proteins for use in accordance with the formulations and methods of the present invention may have various mucoadhesive properties.

Mucoadhesion may generally refer to the attachment of particular macromolecules to a mucin layer of a mucosal surface of a human tongue. The mucoadhesive agent's affinity for attaching to a mucin layer of a mucosal surface of a human tongue may be characterized or quantified by various characterization methods.

As used herein in the specification and in the claims section that follows, the terms "mucoadhesion" and "mucosal adhesion" refer to the tendency of a formulation, or of particular macromolecules (e.g., various proteins) to attach to a mucin layer of a mucosal surface of a human tongue.

As used herein in the specification and in the claims section that follows, the term "mucoadhesive agent" and the like refers to a substance exhibiting an affinity for attaching to a mucin layer of a mucosal surface of a human tongue, via mucoadhesion.

The mucoadhesive properties of the proteins for use in accordance with the formulations and methods of the present invention may have numerous hydrophilic groups, such as amine groups, methoxy groups, hydroxyl groups, etc., which may aid the attachment to mucus or cell membranes through various interactions such as hydrogen bonding and electrostatic interactions. Mucoadhesion may be promoted by various physical phenomena, including entanglement.

The sweetener or edible formulations of the present invention may have a characteristically high degree of crystallinity.

**In** some embodiments, the sweetener in the sweetener formulations, as well as the food formulations utilizing such sweetener formulations, is predominantly crystalline.

**In** some embodiments, the crystallinity is within a range of 70 to 100%.

**In** some embodiments, the crystallinity is within a range of 80 to 100%.

**In** some embodiments, the crystallinity is within a range of 90 to 100%.

**In** some embodiments, the crystallinity is within a range of 95 to 100%.

Quantification of the degree of crystallinity, or of the relative quantities of amorphous sweetener vs. crystalline sweetener (e.g., as used herein in the specification and in the claims section that follows), may be determined by various analytical procedures known to those skilled in the art, including, but not limited to, the following:

- X-ray powder diffraction (XRPD)
- Isothermal microcalorimeter (IMC)
- Solution calorimetry
- Dynamic vapor sorption (DVS)
- Conventional differential scanning calorimetry (DSC), Modulated temperature DSC (MTDSC), High speed DSC (hyper-DSC)
- Raman spectroscopy
- Near infrared spectroscopy (NIRS)
- Solid state nuclear magnetic resonance (SS-NMR)
- Inverse phase gas chromatography (IGC)
- Density (specific gravity) measurements.

Since highly crystalline sweeteners (sweetener carbohydrates and sweetener polyols) are known to have reduced solubility kinetics (e.g., in water) with respect to their amorphous counterparts, the use of such highly crystalline sweetener carbohydrates and sweetener polyols for sweetness enhancement is counterintuitive. The inventors have surprisingly discovered, however, that the highly crystalline, protein-containing sweetener particles of the present invention may produce an appreciably enhanced sweetness perception.

Various types and families of vegetable proteins may be used in the inventive formulations.

**In** some embodiments, the protein is, or includes, a globular protein.

**In** some embodiments, the protein is, or includes, a storage protein.

**In** some embodiments, the storage protein is, or includes, a globulin.

**In** some embodiments, the storage protein is, or includes, an albumin.

**In** some embodiments, the storage protein is, or includes, a seed storage protein.

**In** some embodiments, the storage protein is, or includes, a prolamin.

**In** some embodiments, the storage protein is, or includes, a glutelin.

**In** some embodiments, the storage protein is, or includes, a 2S albumin.

**In** some embodiments, the globulin protein is, or includes, a 7S vicilin.

**In** some embodiments, the globulin protein is, or includes, a legumin.

**In** some embodiments, the globulin protein is, or includes, a 15S globulin.

**In** some embodiments, the globulin protein is, or includes, an 8S convicilin.

**In** some embodiments, the globulin protein is, or includes, a $\gamma$-conglutin.

**In** some embodiments, the globulin protein is, or includes, a $\beta$-conglutin.

**In** some embodiments, the at least one vegetable protein is in the form of any one or any combination of vegetable protein concentrate, vegetable protein isolate, and partially hydrolyzed vegetable protein.

**In** some embodiments, the at least one vegetable protein includes an integral protein, as defined hereinbelow. Typically, the at least one vegetable protein mainly or predominantly includes an integral protein.

**In** some embodiments, the at least one vegetable protein consists essentially of an integral protein.

**In** some embodiments, the vegetable protein includes rice protein.

**In** some embodiments, the vegetable protein includes pea protein.

**In** some embodiments, the vegetable protein includes chickpea protein.

**In** some embodiments, the vegetable protein includes lupin protein.

**In** some embodiments, the vegetable protein includes mung bean protein.

**In** some embodiments, the vegetable protein includes zein protein.

**In** some embodiments, the vegetable protein includes soybean protein.

It will be appreciated by those of skill in the art that proteins may be classified in various ways, often according to their solubility in various media and their sedimentation coefficient. The "Svedberg Unit" of a protein, or of a family of proteins, relates to the sedimentation coefficient of that protein or family of proteins. The "Svedberg Unit" of a protein, or of a family of proteins, is represented by the symbol S. As used herein in the specification and in the claims section that follows, the term "Svedberg Unit" and the like is used as known in the art of protein classification.

Osborne fractionation relates to the classification of plants proteins based on their extractability and solubility.

Plants proteins may be classified into four classes: albumins, globulins, prolamins and glutelins, based on their respective solubilities in water, salt solution, alcohol/water mixture, and alkaline solution.

Albumins of the Albumin class and family are generally characterized as water-soluble (based on Osborne fractionation), globular proteins that are coagulable by heat. **In** plants, albumin is typically present as a 2S storage albumin, based on the sedimentation coefficient. 2S albumin is mainly found in legumes and soybean proteins. As storage proteins, albumins are deposited in protein bodies of developing seeds and are utilized by the plant as a source of nutrients (amino acids and carbon skeletons) during subsequent germination and seedling growth. The amino acid composition of 2S albumin proteins from many plant species typically have a high content of sulphur-containing, water-soluble amino acids.

The Globulins are a class of globular storage proteins typically having a higher molecular weight than the albumins. Globulins are soluble in dilute salt solution, but are substantially insoluble in water. Globulins may be the main or predominant protein among various legumes such as peas, chickpeas, lupin beans, and soybeans. They are present not only in dicots but also in various monocots, gymnosperms, and ferns. Based on the sedimentation coefficient, the plant globulins may be divided into 7-8S, 11-12S and 15S families. The 7S globulins are generally referred to as vicilin-type globulins (or "vicilin family"), the 8S may be referred to as convicilin-type globulins (or "convicilin family"), and the 11-12S globulins may be referred to as legumin-type globulins (or "legumin family").

The Prolamin class and family as well as the Glutelin class and family of proteins are storage proteins mainly found in seeds of grasses such as rice and zein. Prolamins are soluble in ethanol/water and may be substantially insoluble in water. Glutelins, which are sometimes considered to be prolamins, are the most abundant storage protein in rice and are believed to share homology with the legumin family. Glutelins, which typically accumulate in the endosperm, may be substantially insoluble in saline solution, but may be soluble in dilute acidic and alkaline media.

For the avoidance of doubt, these terms (e.g., "globulin class", "a vicilin", "convicilin family", "legumin family", etc.) are meant to be used as understood by those of skill in the art of protein classification.

Table 1 provides a general classification of the various plant protein classes and families, along with various quantitative examples of proteins distribution (on a weight basis) in various common plant products.

TABLE 1

| Protein Class | Protein/Protein Family | Svedberg unit | Pea | Chickpea | Mung bean | Lupin | Soybean | Zein | Rice |
|---|---|---|---|---|---|---|---|---|---|
| | | | Protein Distribution according to Family | | | | | | |
| | | | % | % | % | % | % | % | % |
| Globulin | Legumin family (e.g., legumin, $\alpha$-conglutin, glycinin) | 11S | 11% | 32% | 8% | 30% | 90% | 3% | 12% |
| | Vicilin family (e.g., vicilin, $\beta$-conglycinin, $\beta$ and $\gamma$-conglutin) | 7S | 71% | 26% | 3% | 70% | | | |
| | 15S family | 15S | | 6% | | | | | |
| | Convicilin family | 8S (8S$\alpha$, 8S$\alpha$', 8S$\beta$) | | | 89% | | | | |
| Albumin | Albumin family | 2S | 18% | 26% | | | 10% | 3% | 4% |
| Glutelin | Glutelin family (e.g., $\alpha$-glutelin, $\beta$-glutelin) | - | | 10% | | | | 34% | 78% |
| Prolamin | Prolamin family (e.g., rice prolamins, zein) | - | | | | | | 60% | 6% |

In the food formulations of the present invention, an edible filler material is typically utilized to make up the reduced amount of sugar in the food formulations of the present invention. Typically, the edible filler may be a dietary fiber or soluble fiber such as a soluble dietary fiber.

In some embodiments, the edible filler may be, or include, a polysaccharide, such as a fructan. Of the fructans, inulin may typically be used.

In some embodiments, the edible filler may be, or include, an oligosaccharide, such as a fructooligosaccharide.

In some embodiments, the soluble fiber may be, or include, resistant maltodextrin, e.g., soluble corn fiber.

In some embodiments, the soluble fiber may be, or include, polydextrose.

The sweetener formulation or edible formulation is typically devoid of silicon-containing species such as silica. In some embodiments, the concentration of silicon within the sweetener formulation or edible formulation is at most 1%, at most 0.5%, at most 0.2%, at most 0.1%, at most 0.05%, at most 0.02%, at most 0.01%, at most 0.005%, or at most 0.003%. Typically, the concentration of silicon within the sweetener formulation or edible formulation is at most 0.002%, at most 0.001%, or the formulation is devoid of silicon.

*EXAMPLES*

Reference is now made to the following examples, which together with the above descriptions, illustrate the invention in a non-limiting fashion.

EQUIPMENT

| Instruments | Manufacturer | Model | Measuring range | Units | Geometry |
|---|---|---|---|---|---|
| High shear mixer | IKA | IKA T 25 ULTRA-TURRAX® | 3000-25000 | rpm | |
| | Silverson | L5M-A | 0-8000 | rpm | |
| Vacuum mixer-dryer (cooking mixer) | Stephan | UMC 5 | 300-3000 | 1/min | |
| Vacuum pump | Vacuubrand | MZ 2C NT | 50 | Hz | |
| Laboratory oven | MRC Ltd | DFO-150 | 25-250 | °C | |
| Ultra centrifugal mill | Retsch | ZM200 | 50 | Hz | |
| Refractometer | Schmidt + Haensch | VariRef A | 0.00-100 Bx | % | |
| Texture analyzer | Stable Micro Systems | TA.XTplus | 0-5000 | gr | A/MUC Mucoadhesion Test Rig |
| Rheometer | Anton Paar GmbH | MCR 92 P/N:159000 | 0-1000 | 1/s | Bob-cup cylinder |

MATERIALS

| Material | Manufacturer | Type/Product Name |
|---|---|---|
| Rice protein | LSP® | LSP® +ZERO |
| | ETChem | |
| | Milk Specialties Global | PROriz™ 80 |
| | Axiom Foods Inc. | Oryzatein® |

(continued)

| Material | Manufacturer | Type/Product Name |
|---|---|---|
| Pea protein | Roquette | Nutralys |
| | Pangea | |
| | AGT Food and Ingredients | FYPP-85-C |
| | Axiom Foods Inc. | VegOtein P™ |
| | Zammex® Nutrition LLC | HydroPea - 100% Pure Organic Hydrolyzed Pea Protein Powder |
| Mung bean | Harbin Hada Starch Co., Ltd. | H-Protein 008 |
| | ET-chem Natural ingredients | |
| Lentil | AGT Food and Ingredients | FYLP-55-D |
| Faba bean | AGT Food and Ingredients | FYBP-90-C |
| Potato | Avebe | Solanic 200 |
| | Bioriginals | SOLATHIN |
| Zein | A.F. Suter & Co. Ltd | |
| | FloZein Products | FloZein |
| Hemp | Axiom Foods Inc. | Cannatein® |
| | Bioriginals | |
| Lupin | ProLupin | 10600 |
| | Lup'Ingredients | PROTILUP |
| Soy protein | Axiom Foods Inc. | Oryzatein® SG-BN |
| Chickpea | Agrinnovation Ltd. | ChickP G910 |
| | | ChickP G930 |
| | Artesa | |
| Pumpkin protein | Axiom Foods Inc. | Cucurbotein® |
| Protein source by fermentation | Perfect Day | Beta-lactoglobulin |
| Filler -- Inulin | Beneo | Orafti High Soluble Inulin |
| | Cosucra | Fibruline |
| | Sensus | Frutafit CLR |
| FillerFructooligosaccharide | Galam | Gofos™ |

Various common materials (sugars, polyols, *etc.)* have not been included in this list.

**EXAMPLE** 1: Production of a Protein-Sweetener Dispersion

The protein and carbohydrate sweetener powders are mixed or blended. The resulting powder mixture is added gradually to water. The requisite amount of protein is calculated in ratio to the carbohydrate sweetener (weight-weight). For example: in order to prepare about 1 kilogram (typically 65°Bx) of syrup containing 0.1% protein with respect to the carbohydrate sweetener, 0.65 grams of the protein are mixed with 650 grams of the carbohydrate sweetener. This mixture is added gradually (under constant mixing) to 350 grams of water, typically at room temperature. The mixing vessel is stirred using an overhead stirrer, typically at 50-800 RPM for at least 45 minutes, or for at least 7 minutes using a high shear mixer (up to 10,000 RPM for IKA; up to 5,000 RPM for Silverson), until the protein is fully dispersed.

For proteins that are more difficult to disperse, the water fraction may be preheated.

*EXAMPLE 2:* Production of a Protein-Sweetener Dispersion - Full Dispersion

A concentrated sweetener syrup containing one or more carbohydrate sweeteners and/or one or more polyol (typically sugar alcohol) sweeteners, is prepared prior to the addition of the protein, from room temperature to as much as 80°C in some cases. The default temperature is 60°C for sucrose and any other di-saccharides, and 70°C for other sweetener species. The concentration is about 65wt% for most of the carbohydrate and polyol sweeteners. Some of the lower solubility sweeteners, may require higher water concentrations and/or temperatures in order to fully dissolve. The protein is then added incrementally or instantaneously under constant mixing. Once the protein addition has been completed, the mixing vessel continues to be stirred using an overhead stirrer, typically at 50-800 RPM for at least 45 minutes, or for at least 7 minutes using a high shear mixer (up to 10,000 RPM for IKA; up to 5,000 RPM for Silverson), until the protein is fully dispersed.

When necessary, the syrup is heated to facilitate the dispersion of the protein.

*EXAMPLE 3:* Production of a Protein-Sweetener Dispersion - Full Dispersion

The protein is first dispersed in water. In some cases, the dispersion may be best performed according to the instructions of the manufacturer (e.g., dispersing incrementally in hot water). Once the protein is fully dispersed, the sweetener (carbohydrate or polyol) is gradually introduced under constant mixing, from room temperature to as much as 80°C in some cases. The default temperature is 60°C for sucrose and any other di-saccharides, and 70°C for other sweetener species. Mixing may be effected by means of an overhead stirrer (50-800 RPM for at least 45 minutes) or by means of a high-shear mixer (up to 10,000 RPM for at least 7 minutes when using IKA; up to 5,000 RPM for at least 7 minutes when using the Silverson).

Thus, to prepare about a kilogram of a carbohydrate or polyol sweetener syrup containing about 65% carbohydrate sweetener and 0.1% protein with respect to the carbohydrate sweetener, 0.65 grams of the protein are first dispersed in 350 grams water. Subsequently, 650 grams of the carbohydrate sweetener are added gradually to the protein dispersion to produce the syrup.

*EXAMPLE 4:* Production of a Protein-Sweetener Dispersion -- Partial Dispersion

Partial dispersion of the protein may be deliberately effected. A concentrated sweetener syrup (carbohydrate or polyol) is prepared prior to the addition of the protein, as described in Example 2. The protein is then added in instantaneous or substantially instantaneous fashion, without mixing or with gentle mixing, typically up to about 1 minute, so as to deliberately produce small aggregates. In this manner, a concentrated syrup containing partially dispersed protein is produced.

In this "partial dispersion" procedure, it may best to deviate from the dispersion instructions of the protein manufacturer, in order to mitigate the dispersion.

*EXAMPLE 5:* Production of a Dry Powder from the Concentrated Syrup

Concentrated syrup (e.g., produced in any of the above-provided examples) is transferred to the heated double-jacketed vessel of the vacuum dryer (e.g., Stephan). The vessel is heated (typically 60°C-70°C), maintained under vacuum (typically 50-300 mbar), and mixed constantly, so as to evaporate the water, typically at a low rate of evaporation, so as to produce a predominantly or substantially 100% crystalline product. Optionally, the powder may be transferred to an oven operating at 65°C for further drying for several hours or overnight.

*EXAMPLE 6:* Size Reduction of the Protein-Sweetener Powder

The protein-sweetener particles, typically in powder form (e.g., as produced in Example 5), may optionally undergo size reduction. The protein-sweetener powder may be milled to produce a fine powder having a D50 that is typically within the range of 75 to 300 micrometers, depending on the particular protein(s) in the concentrate.

*EXAMPLE 6A:* Utilizing the Sweetener Ingredient to Produce an Edible Formulation

The protein-sweetener formulation (e.g., as produced according to Example 3 and crystallized according to Example 5), is added as an ingredient, along with other ingredients, and may be mixed and optionally processed further (e.g., baked) to produce an edible (food) formulation (e.g., cake, muffins, biscuits).

*EXAMPLE 7*

A dispersion containing 0.1% rice protein formulation (LSP® +ZERO, 79% protein) was prepared according to Example 2: 0.65 grams of the rice protein formulation were added gradually to a concentrated sucrose syrup containing 650 grams sucrose and 350 grams water. The syrup containing the rice protein was then transferred to the heated double-jacketed vessel of the vacuum dryer, which was heated and maintained under vacuum according to Example 5, to produce a fine dry crystalline powder.

*EXAMPLE 8*

A dispersion containing 0.2% rice protein formulation (LSP® +ZERO, 79% protein) was prepared according to Example 2: a concentrated sweetener syrup containing 650 grams sucrose was prepared prior to the addition of the rice protein formulation. 1.3 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

*EXAMPLE 9*

A dispersion containing 0.3% rice protein formulation (LSP® +ZERO, 79% protein) was prepared according to Example 2: a concentrated sweetener syrup containing 650 grams sucrose was prepared prior to the addition of the rice protein formulation. 1.95 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

*EXAMPLE 10*

A dispersion containing 0.5% rice protein formulation (LSP® +ZERO, 79% protein) was prepared according to Example 2: a concentrated sweetener syrup containing 650 grams sucrose was prepared prior to the addition of the rice protein formulation. 3.25 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

*EXAMPLE 11*

A dispersion containing 0.8% rice protein formulation (LSP® +ZERO, 79% protein) was prepared according to Example 2: a concentrated sweetener syrup containing 650 grams sucrose was prepared prior to the addition of the rice protein formulation. 5.2 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

*EXAMPLE 12*

A dispersion containing 1% rice protein formulation (LSP® +ZERO, 79% protein) was prepared according to Example 2: a concentrated sweetener syrup containing 650 grams sucrose was prepared prior to the addition of the rice protein formulation. 6.5 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

*EXAMPLE 13*

A dispersion containing 1.2% rice protein formulation (LSP® +ZERO, 79% protein) was prepared according to Example 2: a concentrated sweetener syrup containing 650 grams sucrose was prepared prior to the addition of the rice protein formulation. 7.8 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

## EXAMPLE 14

A dispersion containing 0.85% rice protein formulation (LSP® +ZERO, 79% protein) was prepared according to Example 2: a concentrated sweetener syrup containing 650 grams sucrose was prepared prior to the addition of the rice protein formulation. 5.5 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder having a protein concentration of about 0.67%.

## EXAMPLE 15

A dispersion containing 0.02% rice protein formulation (LSP® +ZERO, 79% protein) was prepared according to Example 2: a concentrated sweetener syrup containing 650 grams sucrose was prepared prior to the addition of the rice protein formulation. 0.13 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

## EXAMPLE 16

A dispersion containing 0.05% rice protein formulation (LSP® +ZERO, 79% protein) was prepared according to Example 2: a concentrated sweetener syrup containing 650 grams sucrose was prepared prior to the addition of the rice protein formulation. 0.325 grams of the rice protein formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

## EXAMPLES 17-26

The rice protein formulations of Examples 7 to 16 were prepared, but using fructose instead of sucrose.

## EXAMPLE 27

A dispersion containing 0.01% pea protein isolate (Nutralys® S85XF, 83-88% protein) was prepared according to Example 3: 0.065 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 28

A dispersion containing 0.1% pea protein isolate (Nutralys® S85XF, 83-88% protein) was prepared according to Example 3: 0.65 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 29

A dispersion containing 0.2% pea protein isolate (Nutralys® S85XF, 83-88% protein) was prepared according to Example 3: 1.3 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 30

A dispersion containing 0.3% pea protein isolate (Nutralys® S85XF, 83-88% protein) was prepared according to Example 3: 1.95 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 31

A dispersion containing 0.5% pea protein isolate (Nutralys® S85XF, 83-88% protein) was prepared according to Example 3: 3.25 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 32

A dispersion containing **0.8%** pea **protein isolate** (Nutralys® S85XF, 83-88% protein), containing about 0.7% protein, was prepared according to Example 3: 5.2 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 33

A dispersion containing 1.0% pea protein isolate (Nutralys® S85XF, 83-88% protein) was prepared according to Example 3: 6.5 grams of the pea protein isolate were dispersed in 350 grams water. Subsequently, 650 grams sucrose were added gradually to the pea protein isolate to produce a concentrated syrup. The syrup was transferred to the heated double-jacketed vessel of the vacuum dryer, which was heated and maintained under vacuum according to Example 5, to produce a fine dry crystalline powder.

## EXAMPLE 34

A dispersion containing 1.2% pea protein isolate (Nutralys® S85XF, 83-88% protein) was prepared according to Example 3: 7.8 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 35

A dispersion containing 1.5% pea protein isolate (Nutralys® S85XF, 83-88% protein) was prepared according to Example 3: 9.75 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 36

A dispersion containing 0.02% pea protein isolate (Nutralys® S85XF, 83-88% protein) was prepared according to Example 3: 0.13 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

## EXAMPLE 37

A dispersion containing 0.05% pea protein isolate (Nutralys® S85XF, 83-88% protein) was prepared according to Example 3: 0.325 grams of the pea protein isolate were dispersed in 350 grams water. Subsequently, 650 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLES 38-49

The pea protein formulations of Examples 26 to 37 were prepared, but using pea protein hydrolyzate (Zammex® Nutrition LLC HydroPea 100% Hydrolyzed Pea Protein Powder, containing ~95% protein) instead of pea protein isolate.

### EXAMPLE 50

A dispersion containing 0.1% chickpea formulation (ChickP G910, 89.7% protein) was prepared according to Example 3: 0.65 grams of the chickpea formulation were dispersed in 350 grams water. Subsequently, 650 grams sucrose were added gradually to the chickpea dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 51

A dispersion containing 0.3% chickpea formulation (ChickP G910, 89.7% protein) was prepared according to Example 3: 1.95 grams of the chickpea formulation were dispersed in 350 grams water. Subsequently, 650 grams sucrose were added gradually to the chickpea dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 52

A dispersion containing 0.5% chickpea formulation (ChickP G910, 89.7% protein) was prepared according to Example 3: 3.25 grams of the chickpea formulation were dispersed in 350 grams water. Subsequently, 650 grams sucrose were added gradually to the chickpea dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 53

A dispersion containing 1.0% chickpea formulation (ChickP G910, 89.7% protein) was prepared according to Example 3: 6.5 grams of the chickpea formulation were dispersed in 350 grams water. Subsequently, 650 grams sucrose were added gradually to the chickpea dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 54

A dispersion containing 0.1% mung bean formulation (H-Protein 008, 85% protein) was prepared according to Example 3: 0.65 grams of the mung bean formulation were dispersed in 350 grams water. Subsequently, 650 grams sucrose were added gradually to the mung bean dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 55

A dispersion containing 0.5% mung bean formulation (H-Protein 008, 85% protein) was prepared according to Example 3: 3.25 grams of the mung bean formulation were dispersed in 350 grams water. Subsequently, 650 grams sucrose were added gradually to the mung bean dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 56

A dispersion containing 1.2% mung bean formulation (H-Protein 008, 85% protein) was prepared according to Example 3: 7.8 grams of the mung bean formulation were dispersed in 350 grams water. Subsequently, 650 grams sucrose were added gradually to the mung bean dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 57**

A dispersion containing 0.2% mixed protein formulation was prepared according to Example 3: 0.65 grams of the mung bean formulation (H-Protein 008, 85% protein) and 0.65 grams of chickpea formulation (ChickP G910, 89.7% protein) were dispersed in 350 grams water. Subsequently, 650 grams sucrose were added gradually to the mixed protein dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 58**

A dispersion containing 0.02% mung bean formulation (H-Protein 008, 85% protein) was prepared according to Example 3: 0.13 grams of the mung bean formulation were dispersed in 350 grams water. Subsequently, 650 grams sucrose were added gradually to the mung bean dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 59**

A dispersion containing 0.1% zein formulation (A.F. Suter 81.9%-100%) was prepared according to Example 3: 0.65 grams of the zein formulation were dispersed in 350 grams water. Subsequently, 650 grams sucrose were added gradually to the zein dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 60**

A dispersion containing 1.0% zein (A.F. Suter 81.9%-100%) was prepared according to Example 3: 6.5 grams of the zein formulation were dispersed in 350 grams water. Subsequently, 650 grams sucrose were added gradually to the zein dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 61**

A dispersion containing 0.5% zein (A.F. Suter 81.9%-100%) was prepared according to Example 3: 3.75 grams of the zein formulation were dispersed in 350 grams water. Subsequently, 650 grams sucrose were added gradually to the zein dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLES 62-66**

The pea protein isolate compositions of Examples 28, 30, 31, 34, and 36 were formulated according to the procedure of Example 2. Each syrup was then transferred to the heated double-jacketed vessel of the vacuum dryer, which was heated and maintained under vacuum according to Example 5, to produce a fine dry crystalline powder.

**EXAMPLES 67-71**

The rice protein compositions of Examples 7, 9, 10, 12, and 15 were formulated according to the procedure of Example 1. Each syrup was then transferred to the heated double-jacketed vessel of the vacuum dryer, which was heated and maintained under vacuum according to Example 5, to produce a fine dry crystalline powder.

### EXAMPLES 72-73

The pea protein isolate compositions of Examples 27 and 30 were formulated according to the procedure of Example 4. Each syrup was then transferred to the heated double-jacketed vessel of the vacuum dryer, which was heated and maintained under vacuum according to Example 5, to produce a fine dry crystalline powder.

### EXAMPLES 74-78

The rice protein compositions of Examples 7, 9, 10, 12, and 15 were formulated according to the procedure of Example 3.

### EXAMPLE 79

A dispersion containing 0.05% rice protein formulation (LSP® +ZERO, 79% protein was prepared according to Example 3: 0.325 grams of the rice protein formulation were dispersed in 350 grams water. Subsequently, 650 grams maltitol were added gradually to the rice protein dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 80

A dispersion containing **0.1% rice** protein formulation (LSP® +ZERO, 79% protein was prepared according to Example 3: 0.65 grams of the rice protein formulation were dispersed in 350 grams water. Subsequently, 650 grams sorbitol were added gradually to the rice protein dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 81

A dispersion containing 0.3% rice protein formulation (LSP® +ZERO, 79% protein was prepared according to Example 3: 1.95 grams of the rice protein formulation were dispersed in 350 grams water. Subsequently, 650 grams lactitol were added gradually to the rice protein dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLES 82-91

The rice protein formulations of Examples 7 to 16 were prepared, but using xylitol instead of sucrose.

### EXAMPLE 92

A dispersion containing 0.3% pea protein isolate (Nutralys® S85XF, 83-88% protein) was prepared according to Example 3: 1.95 grams of the pea protein isolate were dispersed in 350 grams water. Subsequently, 650 grams sorbitol were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 93

A dispersion containing 0.3% pea protein isolate (Nutralys® S85XF, 83-88% protein) was prepared according to Example 3: 1.95 grams of the pea protein isolate were dispersed in 350 grams water. Subsequently, 325 grams sorbitol and 325 grams xylitol were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 94

A dispersion containing 0.3% pea protein isolate (Nutralys® S85XF, 83-88% protein) was prepared according to Example 3: 1.95 grams of the pea protein isolate were dispersed in 350 grams water. Subsequently, 325 grams sorbitol and 325 grams sucrose were added gradually to the pea protein isolate dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 95**

A dispersion containing 0.3% rice protein formulation (LSP® +ZERO, 79% protein) was prepared according to Example 3: 1.95 grams of the rice protein formulation were dispersed in 350 grams water. Subsequently, 550 grams sorbitol and 100 grams sucrose were added gradually to the rice protein dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 96**

A dispersion containing 0.02% lupin formulation (ProLupin 90%-99% protein) was prepared according to Example 3: 0.13 grams of ProLupin were dispersed in 350 grams water. Subsequently, 650 grams sucrose were added gradually to the dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 97**

A dispersion containing 0.05% lupin formulation (ProLupin 90%-99% protein) was prepared according to Example 3: 0.325 grams of ProLupin were dispersed in 350 grams water. Subsequently, 650 grams sucrose were added gradually to the dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 98**

A dispersion containing 0.1% lupin formulation (ProLupin 90%-99% protein) was prepared according to Example 2: 0.65 grams of ProLupin were added gradually to a concentrated sucrose syrup containing 650 grams sucrose and 350 grams water. The syrup containing the lupin was then transferred to the heated double-jacketed vessel of the vacuum dryer, which was heated and maintained under vacuum according to Example 5, to produce a fine dry crystalline powder.

**EXAMPLE 99**

A dispersion containing 0.2% lupin formulation (ProLupin 90%-99% protein) was prepared according to Example 2: a concentrated sweetener syrup containing 650 grams sucrose was prepared prior to the addition of the lupin formulation. 1.3 grams of the lupin formulation were then dispersed in the concentrated sweetener syrup. The syrup was transferred to the heated double-jacketed vessel of the vacuum dryer, which was heated and maintained under vacuum according to Example 5, to produce a fine dry crystalline powder.

**EXAMPLE 100**

A dispersion containing 0.3% lupin formulation (ProLupin 90%-99% protein) was prepared according to Example 3: 1.95 grams of the lupin formulation were dispersed in 350 grams water. Subsequently, 650 grams sucrose were added gradually to the dispersion to produce a concentrated syrup. The syrup was transferred to the heated double-jacketed vessel of the vacuum dryer, which was heated and maintained under vacuum according to Example 5, to produce a fine dry crystalline powder.

**EXAMPLE 101**

A dispersion containing 0.5% lupin formulation (ProLupin 90%-99% protein) was prepared according to Example 3: 3.25 grams of the lupin formulation were dispersed in 350 grams water. Subsequently, 650 grams sucrose were added gradually to the dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 102

A dispersion containing 0.8% lupin formulation (ProLupin 90%-99% protein) was prepared according to Example 3: 5.2 grams of the lupin formulation were dispersed in 350 grams water. Subsequently, 650 grams sucrose were added gradually to the dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 103

A dispersion containing 1.0% lupin formulation (ProLupin 90%-99% protein) was prepared according to Example 3: 6.5 grams of the lupin formulation were dispersed in 350 grams water. Subsequently, 650 grams sucrose were added gradually to the dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 104

A dispersion containing 1.2% lupin formulation (ProLupin 90%-99% protein) was prepared according to Example 3: 7.8 grams of the lupin formulation were dispersed in 350 grams water. Subsequently, 650 grams sucrose were added gradually to the dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLE 105

A dispersion containing 1.5% lupin formulation (ProLupin 90%-99% protein) was prepared according to Example 3: 9.75 grams of the lupin formulation were dispersed in 350 grams water. Subsequently, 650 grams sucrose were added gradually to the dispersion to produce a concentrated syrup. The syrup was transferred to the heated double-jacketed vessel of the vacuum dryer, which was heated and maintained under vacuum according to Example 5, to produce a fine dry crystalline powder.

### EXAMPLES 106-113

The pea protein isolate formulations of Examples 26 to 33 and 36 37 were prepared, but using glucose instead of sucrose, and using 550 grams water (instead of 350 grams) in the initial dispersion.

### EXAMPLES 114-115

The powders obtained from Examples 39 and 31 were subjected to X-ray diffraction (XRD) using an X-ray Diffractometer (D8 Advance Series II, Bruker). Both XRD plots exhibit distinctly crystalline character.

### EXAMPLE 116: Preparation of Muffin Samples

Three types of muffin samples may be prepared. Type I is a "full sugar" control muffin, which may be similar in composition to typical, commercially available muffins. Type II is an inventive, reduced-sugar muffin containing the inventive protein-sweetener or protein-sweetener concentrate. Type III is a reduced sugar control muffin, having the identical composition as the Type II inventive, reduced-sugar muffin, but being devoid of the protein in the sweetener particles.

The batter for each type of muffin contains sugar, 14.2% sunflower oil, 21.8% wheat flour (containing approximately 68% starch), 24.5% eggs, baking powder (1.1%), flavors or flavorants (0.1%), salt (0.1%), and about 16.4% water. The batter of the Type I muffin contains 21.8 wt.% sugar.

A fructooligosaccharide is used as a filler to make up for the reduced amount of sugar in the Type II and Type III samples. Typically, Gofos™ (typically containing 2% sugar) is utilized.

The Type II muffin utilizes a sweetener formulation from various exemplary formulations (many of which are described or exemplified hereinabove). Aside from the formulative differences, the preparation and baking process is identical for the inventive muffin and the control muffins.

*EXAMPLE 116A*

Typically, the Type II inventive, reduced-sugar muffin contains 39.1% less sugar with respect to the Type I "full sugar" control muffin. For this exemplary case, the Type II and Type III muffins are formulated such that the batter contains about (100%-39.1%)•21.8% = 13.3 wt.% sugar. The fructooligosaccharide (Gofos™) content of the muffin batter is about 8.5wt% (21.8% - 13.38%).

*EXAMPLE 116B*

In many cases, the Type II inventive, reduced-sugar muffin may contain reduced sugar in an amount other than the typical reduction of 39.1%. By way of (non-exhaustive) example, the Type II muffin may contain 50% less sugar, 35% less sugar, 20% less sugar, or 10% less sugar. For an exemplary case of 20% less sugar, the Type II muffin is formulated such that the batter contains about (100%-20%)•21.8% = 17.44 wt.% sugar, and 4.36 wt.% Gofos™ (21.8% - 17.44%). In any event, strictly for comparative purposes, the Type II muffin contains at least 10% less sugar with respect to the Type I "full sugar" control muffin.

*EXAMPLE 117:* Preparation of Butter Cookie Samples

Three types of butter cookie samples may be prepared. Type I is a "full sugar" control butter cookie, which may be similar in composition to typical, commercially available butter cookies. Type II is an inventive, reduced-sugar butter cookie containing the inventive protein-sweetener or protein-sweetener concentrate. Type III is a reduced sugar control butter cookie, having the identical composition as the Type II inventive, reduced-sugar butter cookie, but being devoid of the protein in the sweetener particles.

The batter for each type of butter cookie contains sugar, 14.6% palm oil, 49.42% wheat flour (containing approximately 68% starch), corn starch (4.2%), water (5.7%), egg (3.6%), soy lecithin (0.19%), baking powder (0.3%), salt (0.2%), 1.2% invert sugar (containing 5% water), 1.5% heavy cream (containing 37% fat and 3.5% lactose), flavor or flavorants (0.1%), with water being the remainder. The sugar content of the Type I butter cookie is about 19.0%.

Inulin is used as a filler to make up for the reduced amount of sugar in the Type II and Type III samples. Typically, Orafti High Soluble Inulin (which contains 10% sugar) is utilized.

The Type II butter cookie utilizes a sweetener formulation from various exemplary formulations (many of which are described or exemplified hereinabove). Aside from the formulative differences, the preparation and baking process is identical for the inventive butter cookie and the control butter cookies.

*EXAMPLE 117A*

Typically, the Type II inventive, reduced-sugar butter cookie contains about 40% less sugar with respect to the Type I "full sugar" control butter cookie. For this exemplary case, the Type II and Type **III** butter cookies are formulated such that the batter contains about (100%-40.45%)-19.0% = 11.3 wt.% sugar. The inulin content of the batter is about 7.7wt.% (19.0% - 11.3%).

*EXAMPLE 117B*

Substantially as in the case of the muffin samples provided hereinabove, in many cases, the Type II inventive, reduced-sugar butter cookie may contain reduced sugar in an amount other than the typical reduction of about 40%. By way of (non-exhaustive) example, the Type II butter cookie may contain 50% less sugar, 40% less sugar, 35% less sugar, 20% less sugar, or 10% less sugar. Strictly for comparative purposes, the Type II butter cookie contains at least 10% less sugar with respect to the Type I "full sugar" control butter cookie.

*EXAMPLE 118:* Preparation of Hazelnut Spread Samples

Three types of hazelnut spread samples may be prepared. Type I is a "full sugar" control hazelnut spread, which may be similar in composition to typical, commercially available hazelnut spreads. Type II is an inventive, reduced-sugar hazelnut spread containing the inventive protein-sweetener or protein-sweetener concentrate. Type **III** is a reduced sugar control hazelnut spread, having the identical composition as the Type II inventive, reduced-sugar hazelnut spread, but being devoid of the protein in the sweetener particles.

Each type of hazelnut spread contains sugar, hazelnut paste (15%), palm oil (21.7%), cocoa powder (7.4%) having 12% fat, skim milk powder (6.6%), rapeseed lecithin (0.2%) and flavors or flavorants (0.1%). The sugar content of the Type I hazelnut spread is 49%.

A fructooligosaccharide is used as a filler to make up for the reduced amount of sugar in the Type II and Type III samples. Typically, Gofos™ is utilized.

The Type II hazelnut spread utilizes a sweetener formulation from various exemplary formulations (many of which are described or exemplified hereinabove). Aside from the formulative differences, the preparation process is identical for the inventive hazelnut spread and the control hazelnut spreads.

## EXAMPLE 118A

Typically, the Type II inventive, reduced-sugar hazelnut spread contains about 41% less sugar with respect to the Type I "full sugar" control hazelnut spread. For this exemplary case, the Type II and Type III hazelnut spreads are formulated to contain about (100%-41.2%)•49% = 28.8 wt.% sugar. The inulin content of the hazelnut spread is about 20.2 wt.% (49% - 29.4 %).

## EXAMPLE 118B

Substantially as in the case of the hazelnut spread samples provided hereinabove, in many cases, the Type II inventive, reduced-sugar hazelnut spread may contain reduced sugar in an amount other than the typical reduction of about 40%. By way of (non-exhaustive) example, the Type II hazelnut spread may contain 50% less sugar, 35% less sugar, 20% less sugar, or 10% less sugar. Strictly for comparative purposes, the Type II hazelnut spread contains at least 10% less sugar with respect to the Type I "full sugar" control hazelnut spread.

## EXAMPLE 119: Sensory Evaluation

The exemplary sweetener or edible formulations (e.g., muffins, butter cookies and hazelnut spreads) may be evaluated by trained sensory panelists using a paired-comparison test. The paired-comparison test is a two-product blind test, and the panelists' task is to choose/indicate the sweeter one of the two products or samples (Sensory Evaluation Practices, 4th Ed., Stone, Bleibaum, Thomas, eds.). The results are analyzed using binomial distribution tables, which allows the sensory scientist to determine whether perceived differences between the samples are statistically significant.

A Comparative Sweetness Index may be calculated from the paired-comparison test results, compiled from all the panelists. For example, if, among 17 panelists, 10 chose the inventive product as being sweeter, while the other 7 panelists chose the comparative or control product, the Comparative Sweetness Index (CSI) would be calculated as:

$$CSI = (10/17)\bullet100 = 58.8 = 59 \text{ (rounded)}$$

## EXAMPLE 119A

Another sensory method used to evaluate samples is difference magnitude estimation (DME). Here, each panelist tastes the two samples, choose the sweetest, and also chooses the difference in sweetness, from the following list:

- No difference at all

- Extremely small difference

- Small difference

- Moderate difference

- Large difference

- Extremely large difference

Each choice is given a numerical value of 0 to 5 (with "0" being "No difference at all"), and the average of the panel is calculated. When the inventive, protein-containing sample is indicated as sweeter, the values are taken as positive, and vice versa). Generally, a difference of up to $\pm$1.0 (i.e., within an absolute value of 1), and in some cases, up to $\pm$0.8 or up to ±0.5, is considered to be insignificant (i.e., the sweetness of the samples is substantially the same). An insignificant difference is considered to be a good result for the inventive formulation vs. the control formulation.

### EXAMPLES 120-121

Various formulations exemplified hereinabove were used to prepare muffin samples, according to Examples 116 and 116A.

Pair-comparison test results of the pair-comparison tests, performed and evaluated according to Examples 119 and 119A, are listed below in Table 2.

TABLE 2

| Example No. | % Protein (Nominal) | % Protein (Actual) | Protein | DME | Comparative Sweetness Index (CSI) |
|---|---|---|---|---|---|
| 57 | 0.5 | 0.425 | Mung bean | 0.267 | 67% |

### EXAMPLES 122-126

Various formulations exemplified hereinabove were used to prepare butter cookie samples, according to Examples 117 and 117A.

Pair-comparison test results of the pair-comparison tests, performed and evaluated according to Examples 119 and 119A, are listed below in Table 3.

TABLE 3

| Example No. | % Protein (Nominal) | % Protein (Actual) | Protein | DME | Comparative Sweetness Index (CSI) |
|---|---|---|---|---|---|
| 7 | 0.1 | 0.079 | Rice protein | 0.5 | 71% |
| 57 | 0.5 | 0.425 | Mung bean | -0.28 | 36% |
| 28 | 0.1 | 0.088 | pea protein isolate | 0.176 | 41% |

**EXAMPLE 127:** Exemplary Starch Content Calculation

A cookie is made from fat (palm oil, 17%), white wheat flour (61%), a sugar of the present invention (sucrose, 12%; 0.1% WPI), and a fructan (inulin, 10%). The only starch-containing ingredient is the white wheat flour, which contains about 68% starch. Thus, the starch content of the cookie is 68% of 61%, or about 41.5%.

**EXAMPLE 128:** Exemplary Fat Content Calculation

A hazelnut spread is made from fat (palm oil, 24%), a sugar of the present invention (sucrose, 30%; 0.1% rice protein formulation), pure hazelnut paste (13%, having a 61% fat content), non-fat milk powder (6%), cocoa powder (7% having a 12% fat content) and a fructan (inulin, 20%). The total fat content of the hazelnut spread is 24% + 61% of 13% + 12% of 7%, or about 32.8%.

**EXAMPLE 129:** Tensile strength/Detachment Force-Texture Analysis

The mucoadhesion properties of sweetener formulations were evaluated by performing detachment tests using the TA.XTplus Texture Analyzer. The effect of various mucoadhesive species of vegetable protein on the adhesiveness of the sweetener formulation was also investigated, at various concentrations.

Materials and methods

Before the detachment tests were executed, the following steps were performed: tablet preparation from sugar samples, preparation of artificial saliva buffer solution and trimming of fresh pig tongues to pieces of 30 mm X 30 mm with thickness of around 20 mm. The tongue tissues were frozen at -20°C. Before the test, the tongue tissue was heated to 37°C for 5 minutes. In terms of artificial saliva, the solution was prepared according to the following composition (Table 4):

TABLE 4: Artificial Saliva Composition

| | |
|---|---|
| $NaHCO_3$ | 2.5 mM |
| KCl | 10 mM |
| NaCl | 7.4 mM |
| $CaCl_2$ | 1.5 m M |
| $NaH_2PO_4$ | 5.8 mM |

Tablet preparation

Tablets, made from various sweetener samples provided hereinabove, were prepared for detachment test using the Tableting Minipress MII machine. "Dry Mix" samples were ground and mixed with magnesium stearate (as a lubricant) at 2 w/w% in a Tumble Mixer for 2 minutes. The mixture was introduced to the Minipress and pressed at an upper punch penetration of 11 mm, to produce flat tablets. The sweetener samples, produced according to Example 3 and further processed according to Example 5 (including further drying overnight), were pressed at a lower upper punch penetration of 7.5 - 9 mm. For all samples, the preparation rate was around 40 tablets/minute, in automatic mode. The diameter of the tablet is 10 mm.

Detachment Tests

The trimmed pig tongue piece was pressure-fixed between a plastic platform and a lid, by means of four screws. A hole (13 mm in diameter), disposed in the middle of the lid, enables tablet-tongue contact. The plastic platform and pig tongue arrangement was maintained in the artificial saliva solution under constant temperature of 37°C. A sweetener tablet was attached to the Texture Analyzer (TA) probe (cylinder) by means of a double-sided adhesive tape. The measurement was performed using the following procedure: the probe, together with the tablet, was lowered at constant speed until a pre-determined applied force was exerted, for a fixed contact time, with the tongue tissue. Once finished, the probe and tablet were lifted, and the (maximum) detachment force ($F_{max}$) and detachment work (area between the curve and X-axis, also termed "total work of adhesion") were recorded for each of the sweetener tablets. The whole process was controlled by the TA adhesion test rig, utilizing the settings provided in Table 5.

TABLE 5: Measurement conditions for the detachment tests

| | |
|---|---|
| Pre-test speed | 0.5 mm/s |
| Test speed | 0.5 mm/s |
| Post-test speed | 0.1 mm/s |
| Applied force | 200 gr |
| Return distance | 5.0 mm |
| Contact time | 40 sec |
| Trigger force | 5.0 gr |
| Saliva buffer amount | 100 μL |

As used herein, the above-described detachment test procedure is referred to as a "standard detachment test".
Tablets of various sweetener samples were evaluated to determine the maximum detachment force and the work of detachment, using the equipment and procedures disclosed in Example 129.
In some embodiments, the mucosal adhesion of the sweetener formulation, as characterized by the maximum detachment force, is greater than that of the control composition, (i.e., a formulation being devoid of the vegetable protein, but being otherwise identical to the sweetener formulation in both composition and preparation method). Typically, the mucosal adhesion of the sweetener formulation, as characterized by the maximum detachment force (or by the maximum force of detachment determination ($F_{D-D}$), defined hereinbelow), is greater than that of the control composition by at least 1%, at least 1.5%, at least 2%, at least 3%, or at least 4%, and in some cases, at least 5%, at least 7%, at least 10%, at least 12%, or at least 15%.
The inventors have further discovered that at relatively high levels of mucosal adhesion (e.g., as characterized by at least one of the maximum detachment force and the work of detachment), the presence of the vegetable protein may actually be detrimental to the sweetness of the food or formulation, as perceived by taste-testing.

Thus, in some embodiments, the mucosal adhesion of the sweetener formulation, as characterized by the maximum detachment force (or by $F_{D-D}$), is greater than that of the control composition by at most 200%, at most 150%, at most 100%, at most 80%, and more typically, at most 60%, at most 50%, at most 40%, at most 35%, or at most 30%.

**In** some embodiments, the mucosal adhesion of the sweetener formulation, as characterized by the maximum detachment force (or by $F_{D-D}$), is greater than that of the control composition by a value within a range of 1% to 200%, 1% to 120%, 1% to 80%, 1% to 60%, 1% to 40%, 1% to 30%, 1% to 25%, 1% to 20%, 1.5% to 60%, 1.5% to 40%, 1.5% to 30%, 1.5% to 25%, 1.5% to 20%, 2% to 200%, 2% to 120%, 2% to 80%, 2% to 60%, 2% to 50%, 2% to 40%, 2% to 30%, 2% to 25%, 2% to 20%, 3% to 80%, 3% to 60%, 3% to 40%, 3% to 30%, 3% to 25%, 3% to 20%, 4% to 60%, 4% to 40%, 4% to 30%, 4% to 25%, 4% to 20%, 5% to 60%, 5% to 40%, 5% to 30%, 5% to 25%, 5% to 20%, 6% to 60%, 6% to 40%, 6% to 30%, 6% to 25%, 6% to 20%, 8% to 50%, 8% to 30%, 8% to 25%, 8% to 20%, 10% to 50%, 10% to 30%, 10% to 25%, or 10% to 20%.

**In** some embodiments, the mucosal adhesion of the sweetener formulation, as characterized by the work of detachment (or by the detachment work ($W_D$), defined hereinbelow), is greater than that of the control composition, *(i.e.,* as above, a formulation being devoid of the vegetable protein, but being otherwise identical to the sweetener formulation in both composition and preparation method). Typically, the mucosal adhesion of the sweetener formulation, as characterized by the work of detachment, is greater than that of the control composition by at least 1%, at least 1.5%, at least 2%, at least 3%, at least 5%, at least 7%, at least 10%, at least 20%, at least 30%, at least 40%, or at least 45%.

**In** some embodiments, the mucosal adhesion of the sweetener formulation, as characterized by the work of detachment (or by $W_D$), is greater than that of the control composition by at most 200%, at most 150%, at most 125%, at most 110%, at most 100%, at most 90%, at most 80%, at most 70%, at most 60%, or at most 50%.

In some embodiments, the mucosal adhesion of the sweetener formulation, as characterized by the work of detachment (or by $W_D$), is greater than that of the control composition by a value within a range of 10% to 150%, 10% to 125%, 10% to 100%, 10% to 80%, 20% to 150%, 20% to 125%, 20% to 100%, 20% to 80%, 30% to 150%, 30% to 125%, 30% to 100%, 30% to 80%, 40% to 150%, 40% to 125%, 40% to 100%, 40% to 80%, 50% to 150%, 50% to 125%, 50% to 100%, or 50% to 90%.

As used herein in the specification and in the claims section that follows, the term "maximum detachment force" ($F_{Dmax}$) refers to the maximum detachment force as measured by the standard detachment test.

As used herein in the specification and in the claims section that follows, the term "detachment work" ($W_D$) refers to the work of detachment as measured by the standard detachment test.

As used herein in the specification and in the claims section that follows, the term "work of detachment determination" ($W_{D-D}$) for a sweetener formulation containing a particular species of vegetable protein within the sweetener particles thereof, refers to the work of detachment for the identical vegetable-protein-containing sweetener formulation, but having a concentration of 1% of that particular species of vegetable protein with respect to the sweetener, and prepared and measured according to the standard procedure of Example 129, the obtained detachment work ($W_D$) then being linearly applied using a coefficient $K_{conc}$ based on the actual concentration ($C_{actual}$), in %, of that particular vegetable protein disposed within the sweetener particles of the formulation. Similarly, as used herein in the specification and in the claims section that follows, the term "maximum force of detachment determination" ($F_{D-D}$) for a sweetener formulation containing a particular species of vegetable protein within the sweetener particles thereof, refers to the maximum detachment force ($F_{Dmax}$) for the identical vegetable-protein-containing sweetener formulation, but having a concentration of 1% of that particular species of vegetable protein with respect to the sweetener, and prepared and measured according to the standard procedure of Example 129, the obtained maximum detachment force ($F_{Dmax}$) then being linearly applied using a coefficient $K_{conc}$ based on the actual concentration ($C_{actual}$), in %, of that particular species of vegetable protein disposed within the sweetener particles of the formulation. Thus:

$$K_{conc} = C_{actual} / 1\% \quad (A)$$

$$F_{D-D} = K_{conc} \cdot F_{Dmax} \quad (B)$$

$$W_{D-D} = K_{conc} \cdot W_D \quad (C)$$

As used herein in the specification and in the claims section that follows, the term "mucosal adhesion" and the like, with respect to a formulation, is meant to refer to mucosal adhesion as exhibited by at least one of maximum detachment force ($F_{Dmax}$), maximum force of detachment determination ($F_{D-D}$), detachment work ($W_D$), and work of detachment determination ($W_{D-D}$).

*EXAMPLE 130:* Rheological Characterization of Mucoadhesivity

The mucoadhesive properties of various species of vegetable protein were characterized using rheological measurements. It is known that the rheological behavior of the mixture containing the mucoadhesive vegetable protein and mucin may be appreciably influenced by chemical interactions, conformational changes and chain interlocking between the two species. Rheological techniques are used to study the deformation of material and their flow behavior under shear. Such measurement allows monitoring the interactions between polymers (Hassan and Gallo, 1990). Interactions between the mucoadhesive vegetable proteins and the mucin are manifested by viscosity enhancement, such that the viscosity of the mixture exceeds the sum of the individual viscosities of the mucin and the vegetable protein. Thus, by measuring the individual viscosities, along with the viscosity of the mucin - vegetable-protein mixture, the mucoadhesive force between the mucin and the vegetable protein may be characterized, according to the following equation:

$$\eta t = \eta m + \eta p + \eta b$$

where $\eta t$ is the total (measured) viscosity of the system (mixture), $\eta b$ is the viscosity component of bioadhesion (viscosity enhancement), $\eta m$ and $\eta p$ are the individually-measured viscosities of mucin and vegetable protein single-component dispersions, respectively.

Various vegetable protein dispersions of 2 wt% in distilled water were prepared according to the manufacturer instructions and were gently mixed for 3 hours. Dried mucin was hydrated with distilled water (sufficient to make a 10wt% dispersion) by gentle stirring for 1 hour at room temperature followed by sonication of 10 minutes (at room temperature). The mucin solution was then gently stirred for 2 hours to yield the 10wt% mucin dispersion. Equal amounts of each vegetable protein dispersion and the 10wt% mucin dispersion were mixed to yield a final concentration of 1wt% vegetable protein and 5wt% mucin for each mixed dispersion. All mixture systems were maintained at 37°C for 1 hour to equilibrate prior to analysis.

All measurements were performed using the Anton Paar MRC92 rheometer having a Peltier temperature chamber: C-PTD 180/air, rotating bob (CC27 concentric cylinder) and a fixed cup (C-CC27/SS/AIR) having a diameter of 28.992mm. Prior to the measurement, each sample formulation was allowed to rest for another 2 minutes. The measurements were performed at 37°C at a shear rate ranging between 0.1-350 s$^{-1}$ (logarithmic ramp).

Measurements for each vegetable protein (1 wt%) dispersion and for a 5 wt% mucin dispersion were performed in order to yield the individual viscosities ($\eta p$, $\eta m$). The enhanced viscosity (bioadhesion) was then calculated for each vegetable-protein - mucin, according to the above-provided equation.

The mucoadhesive properties of various samples of were characterized using the rheological equipment and methodology provided in Example 130.

It was found that a particular species of vegetable protein can be considered to be mucoadhesive, or to be a mucoadhesive agent, if the bioadhesion viscosity component ($\eta b$), as measured according to the standard procedure of Example 130, at a vegetable protein concentration of 1%, is at least 3 mPa•s. More typically, $\eta b$ is at least 5 mPa•s, at least 7 mPa•s, or at least 10 mPa•s. As used herein in the specification and in the claims section that follows, this determination of mucoadhesivity (i.e., whether the vegetable protein is considered to be mucoadhesive, or to be a mucoadhesive agent) is referred to as a "standard rheological determination".

Typically, this bioadhesion viscosity component ($\eta b$) is within a range of 2-400 mPa•s, 2.5-400 mPa•s, 2-350 mPa•s, 2.5-350 mPa•s, 3-400 mPa•s, 3-350 mPa•s, 3-300 mPa•s, 3-250 mPa•s, 3-200 mPa•s, 3-150 mPa•s, 4-400 mPa•s, 4-350 mPa•s, 4-300 mPa•s, 4-250 mPa•s, 5-400 mPa•s, 5-350 mPa•s, 5-300 mPa•s, 5-250 mPa•s, 5-200 mPa•s, 5-150 mPa•s, 6-400 mPa•s, 6-350 mPa•s, 6-300 mPa•s, 6-200 mPa•s, 6-150 mPa•s, 7-200 mPa•s, 7-150 mPa•s, 8-200 mPa•s, 8-150 mPa•s, 10-200 mPa•s, 10-150 mPa•s, 10-100 mPa•s, 12-200 mPa•s, 12-150 mPa•s, 15-200 mPa•s, 15-150 mPa•s, 20-200 mPa•s, 20-150 mPa•s, or 20-100 mPa•s.

As used herein in the specification and in the claims section that follows, the term "bioadhesive concentration of vegetable protein" and the like refers to a particular concentration of at least one species of vegetable protein disposed within the sweetener particles of a formulation, the particular concentration of the at least one species of vegetable protein being sufficient to attain a value of at least 3 mPa•s for a bioadhesion viscosity component ($\eta b$), as measured according to the standard procedure of Example 130, but at that particular concentration.

As used herein in the specification and in the claims section that follows, the term "bioadhesive content of vegetable protein" and the like, with respect to a vegetable-protein -containing formulation, refers to an actual concentration ($C_{actual}$) of at least one species of vegetable protein disposed within the sweetener particles of the formulation, said actual concentration being sufficient to attain a bioadhesion viscosity increase ($\Delta\eta_{PS}$) of at least 1.0 mPa•s, wherein the bioadhesion viscosity component ($\eta b$) is measured according to the standard procedure of Example 130 at a concentration of 1% vegetable protein, and then linearly applied to obtain $\Delta\eta_{PS}$ using a coefficient $K_{conc}$ based on the actual concentration ($C_{actual}$), in %, of the at least one species of vegetable protein disposed within the sweetener particles of the formulation:

$$K_{conc} = C_{actual} / 1\% \quad (I)$$

$$\text{bioadhesion viscosity increase } (\Delta\eta_{PS}) = K_{conc} \cdot \eta b \quad (II)$$

Thus, when the bioadhesion viscosity increase ($\Delta\eta_{PS}$) is at least 1.0 mPa•s for $C_{actual}$, the formulation is deemed to have a bioadhesive content of vegetable protein.

As used herein in the specification and in the claims section that follows, the terms "bioadhesive formulation", "bioadhesive sweet formulation" and the like refer to a formulation containing at least one of a bioadhesive concentration of vegetable protein and a bioadhesive content of vegetable protein.

**Additional Embodiments**

Additional Embodiments 1 to 196 are provided hereinbelow.

Embodiment 1. An edible formulation comprising:

(a) sweetener particles containing a sweetener selected from the group consisting of a sweetener carbohydrate and a sweetener polyol; and
(b) a first protein disposed within the sweetener particles, the first protein including a vegetable protein;

wherein a weight-to-weight ratio of the first protein to the sweetener within the sweetener particles is within a range of 0.02% to 0.7%;
and wherein the sweetener within the sweetener particles is predominantly crystalline.

Embodiment 2. The edible formulation of Embodiment 1, wherein a mucosal adhesion of the edible formulation is greater than that of a control formulation, the control formulation being devoid of the first protein, but being otherwise identical to the edible formulation, the mucosal adhesion of the edible formulation exceeding that of the control formulation by 3% to 200%.

Embodiment 3. An edible formulation comprising:

(a) sweetener particles containing a sweetener selected from the group consisting of a sweetener carbohydrate and a sweetener polyol; and
(b) a first protein disposed within the sweetener particles, the first protein including a vegetable protein;

wherein a weight-to-weight ratio of the first protein to the sweetener within the sweetener particles is within a range of 0.02% to 0.7%;
wherein a mucosal adhesion of the edible formulation is greater than that of a control formulation by 3 to 200%, the control formulation being devoid of the first protein, but being otherwise identical to the edible formulation.

Embodiment 4. The edible formulation of Embodiment 2 or 3, wherein the mucosal adhesion of the edible formulation exceeds that of the control formulation by at most 125%.

Embodiment 5. The edible formulation of Embodiment 4, wherein the mucosal adhesion of the edible formulation exceeds that of the control formulation by at most 100%, at most 75%, at most 50%, at most 40%, at most 30%, or at most 25%.

Embodiment 6. The edible formulation of any one of Embodiments 3 to 5, wherein the mucosal adhesion of the edible formulation exceeds that of the control formulation by at least 4%, at least 5%, at least 6%, at least 7%, at least 10%, at least 15%, or at least 20%.

Embodiment 7. The edible formulation of any one of the preceding Embodiments, wherein the sweetener has a sweetness of at least 0.25, on a normalized sweetness scale.

Embodiment 7A. The edible formulation of any one of the preceding Embodiments, wherein the sweetener includes, predominantly includes, or consists essentially of the sweetener carbohydrate.

Embodiment 8. The edible formulation of Embodiment 7A, wherein the sweetener carbohydrate is sucrose, or predominantly sucrose.

Embodiment 9. The edible formulation of any one of the preceding Embodiments, wherein the sweetener and the first protein make up at least 80% of the edible formulation.

Embodiment 10. The edible formulation of any one of the preceding Embodiments, wherein the vegetable protein makes up at least 25% of the first protein.

Embodiment 11. The edible formulation of any one of the preceding Embodiments, wherein the mucosal adhesion of the edible formulation is determined by a standard maximum detachment force determination.

Embodiment 12. The edible formulation of any one of the preceding Embodiments, the mucosal adhesion of the edible formulation is determined by a standard work of detachment determination.

Embodiment 12A. The edible formulation of any one of the preceding Embodiments, wherein the crystallinity of the sweetener particles is determined by quantitative XRD analysis such as XRPD.

Embodiment 12B. The edible formulation of any one of the preceding Embodiments, wherein the crystallinity of the sweetener particles is determined by isothermal microcalorimeter (IMC).

Embodiment 12C. The edible formulation of any one of the preceding Embodiments, wherein the crystallinity of the sweetener particles is determined by solution calorimetry.

Embodiment 12D. The edible formulation of any one of the preceding Embodiments, wherein the crystallinity of the sweetener particles is determined by differential scanning calorimetry (DSC).

Embodiment 12E. The edible formulation of any one of the preceding Embodiments, wherein the crystallinity of the sweetener particles is determined by specific gravity measurement.

Embodiment 13. An edible or food formulation comprising:

(a) the edible formulation of any one of Embodiments 1 to 12; and additional ingredients including:
(b) a fat;
(c) optionally, a starch; and
(d) optionally, an edible filler;

wherein a weight content of the first protein within the food formulation, on a dry basis, is within a range of 0.01% to 0.5%.

Embodiment 14. The food formulation of Embodiment 13, containing at least 3% of the edible filler.

Embodiment 15. The food formulation of Embodiment 13 or 14, wherein a total concentration of the fat, the edible filler, the starch, and any one of the edible formulation, the sweetener, and the sweetener particles, within the food formulation, is at least 30%.

Embodiment 16. The food formulation of Embodiment 15, wherein this total concentration is at least 60%.

Embodiment 17. The food formulation of any one of Embodiments 13 to 16, containing at least 10% of the fat, at least 10% of the starch. at least 5% of the edible filler, and at least 8% of any one of the edible formulation, the sweetener, and the sweetener particles.

Embodiment 18. The food formulation of any one of Embodiments 13 to 17, containing at least 15% of the starch.

Embodiment 19. The food formulation of any one of Embodiments 13 to 18, wherein a ratio of the sweetener in the sweetener particles to a total amount of sweetener in the food formulation is at least 50%.

Embodiment 19A. The food formulation of Embodiment 19, wherein the ratio is at least 65%.

Embodiment 19B. The food formulation of Embodiment 19, wherein the ratio is at least 75%.

Embodiment 19C. The food formulation of Embodiment 19, wherein the ratio is at least 85%.

Embodiment 19D. The food formulation of any one of Embodiments 13 to 19C, wherein the crystallinity of the total population of sweetener particles within the food formulation is at least 75%.

Embodiment 19E. The food formulation of Embodiment 19D, wherein the crystallinity of the total population of sweetener particles is determined by quantitative XRD analysis.

Embodiment 19F. The food formulation of Embodiment 19D, wherein the crystallinity of the total population of sweetener particles is determined by isothermal microcalorimeter (IMC).

Embodiment 19G. The food formulation of Embodiment 19D, wherein the crystallinity of the total population of sweetener particles is determined by solution calorimetry.

Embodiment 19H. The food formulation of Embodiment 19D, wherein the crystallinity of the total population of sweetener particles is determined by differential scanning calorimetry (DSC).

Embodiment 19I. The food formulation of Embodiment 19D, wherein the crystallinity of the total population of sweetener particles is determined by specific gravity measurement.

Embodiment 20. A method of producing the food formulation of any one of Embodiments 13 to 19I, the method comprising:

(a) providing the edible formulation of any one of Embodiments 1 to 12E;
(b) contacting the edible formulation with the additional ingredients; and
(c) optionally subjecting the product of step (b) to an elevated temperature.

Embodiment 20A. The method of Embodiment 20, wherein the contacting includes mixing.

Embodiment 20B. The method of Embodiment 20 or 20A, wherein the product of step (b) is subjected to an elevated temperature.

Embodiment 21. An edible formulation comprising:

(a) sweetener particles containing a sweetener selected from the group consisting of a sweetener carbohydrate and a sweetener polyol; and
(b) a first protein or a vegetable protein disposed within the sweetener particles;

wherein a weight content of the first protein or the vegetable protein within the edible formulation, on a dry basis, is within a range of 0.005% to 1.5%.

Embodiment 21A. The edible formulation of Embodiment 21, wherein the first protein includes the vegetable protein.

Embodiment 21B. The edible formulation of Embodiment 21, wherein the first protein consists essentially of the vegetable protein.

Embodiment 21C. The edible formulation of Embodiment 21, wherein the first protein mainly includes the vegetable protein.

Embodiment 22. The edible formulation of any one of Embodiments 21 to 21C, wherein the sweetener is the sweetener carbohydrate.

Embodiment 23. The edible formulation of any one of Embodiments 21 to 21C, wherein the sweetener is the sweetener polyol.

Embodiment 24. The edible formulation of any one of Embodiments 21 to 23, wherein a total concentration of the sweetener and at least one fat within the edible formulation is at least 10%, on a weight basis.

Embodiment 25. The edible formulation of any one of the preceding Embodiments, wherein the vegetable protein includes a storage protein.

Embodiment 26. The edible formulation of any one of the preceding Embodiments, wherein the vegetable protein includes a seed storage protein.

Embodiment 27. The edible formulation of any one of the preceding Embodiments, wherein the vegetable protein includes a globulin.

Embodiment 28. The edible formulation of any one of the preceding Embodiments, wherein the vegetable protein includes a glutelin.

Embodiment 29. The edible formulation of any one of the preceding Embodiments, wherein the vegetable protein includes an albumin.

Embodiment 30. The edible formulation of any one of the preceding Embodiments, wherein the vegetable protein is a prolamin.

Embodiment 31. The edible formulation of any one of the preceding Embodiments, wherein the vegetable protein includes at least one integral vegetable protein.

Embodiment 32. The edible formulation of any one of the preceding Embodiments, wherein the vegetable protein predominantly includes at least one integral vegetable protein.

Embodiment 32A. The edible formulation of any one of Embodiments 1 to 32, wherein the vegetable protein includes at least one partially-hydrolyzed vegetable protein.

Embodiment 33. The edible formulation of any one of the preceding Embodiments, wherein the total concentration of a or the globulin, a or the glutelin, a or the albumin, and a or the prolamin is at least 80% of the total concentration of the vegetable protein.

Embodiment 34. The edible formulation of Embodiment 33, wherein the total concentration of the globulin and the glutelin is at least 30% of the total concentration of the vegetable protein.

Embodiment 35 The edible formulation of Embodiment 33, wherein the total concentration of the globulin and the glutelin is at least 60% of the total concentration of the vegetable protein.

Embodiment 36. The edible formulation of any one of Embodiments 33 to 35, wherein the total concentration of the globulin and the glutelin is at most 98% of the total concentration of the vegetable protein.

Embodiment 37. The edible formulation of Embodiment 27, wherein the concentration of the globulin is at least 30% of the total concentration of the vegetable protein.

Embodiment 38. The edible formulation of Embodiment 27, wherein the concentration of the globulin is at least 60% of the total concentration of the vegetable protein.

Embodiment 39. The edible formulation of Embodiment 37 or 38, wherein the concentration of the globulin is at most 99% of the total concentration of the vegetable protein.

Embodiment 40. The edible formulation of Embodiment 39, wherein the concentration of the globulin is at most 90% of the total concentration of the vegetable protein.

Embodiment 41. The edible formulation of Embodiment 28, wherein the concentration of the glutelin is at least 5% of the total concentration of the vegetable protein.

Embodiment 42. The edible formulation of Embodiment 28, wherein the concentration of the glutelin is at least 20% of the total concentration of the vegetable protein.

Embodiment 43. The edible formulation of Embodiment 41 or 42, wherein the concentration of the glutelin is at most 90% of the total concentration of the vegetable protein.

Embodiment 44. The edible formulation of Embodiment 43, wherein the concentration of the glutelin is at most 25% of the total concentration of the vegetable protein.

Embodiment 45. The edible formulation of Embodiment 30, wherein the total concentration of the prolamin is at least 2%.

Embodiment 46. The edible formulation of Embodiment 30, wherein the total concentration of the prolamin is at least 10%.

Embodiment 47. The edible formulation of Embodiment 45 or 46, wherein the concentration of the prolamin is at most 75% of the total concentration of the vegetable protein.

Embodiment 48. The edible formulation of Embodiment 47, wherein the concentration of the prolamin is at most 25% of the total concentration of the vegetable protein.

Embodiment 49. The edible formulation of Embodiment 29, wherein the total concentration of the albumin is at least 2% of the total concentration of the vegetable protein.

Embodiment 50. The edible formulation of Embodiment 29, wherein the total concentration of the albumin is at least 10% of the total concentration of the vegetable protein.

Embodiment 51. The edible formulation of Embodiment 49 or 50, wherein the concentration of the albumin is at most 60% of the total concentration of the vegetable protein.

Embodiment 52. The edible formulation of Embodiment 51, wherein the concentration of the albumin is at most 35% of the total concentration of the vegetable protein.

Embodiment 53. The edible formulation of Embodiment 27, wherein the globulin includes a conglutin, and wherein the total concentration of the at least one conglutin is at least 30% of the total concentration of the vegetable protein.

Embodiment 54. The edible formulation of any one of Embodiment 53, wherein the total concentration of the conglutin is at most 85% of the total concentration of the vegetable protein.

Embodiment 55. The edible formulation of any one of the preceding Embodiments, wherein the vegetable protein includes a legumin.

Embodiment 56. The edible formulation of Embodiment 55, wherein the concentration of the legumin is within a range of 20% to 80% of the total concentration of the vegetable protein.

Embodiment 57. The edible formulation of any one of the preceding Embodiments, wherein the vegetable protein includes a vicilin.

Embodiment 58. The edible formulation of any one of the preceding Embodiments, wherein the vegetable protein includes the legumin and the vicilin.

Embodiment 59. The edible formulation of Embodiment 58 wherein the total concentration of the legumin and the vicilin is within a range of 20% to 90% of the total concentration of the vegetable protein.

Embodiment 60. The edible formulation of any one of the preceding Embodiments, wherein the vegetable protein includes pea protein.

Embodiment 61. The edible formulation of Embodiment 60, wherein the vegetable protein mainly includes pea protein.

Embodiment 62. The edible formulation of any one of the preceding Embodiments, wherein the vegetable protein includes chickpea protein.

Embodiment 63. The edible formulation of Embodiment 62, wherein the vegetable protein mainly includes the chickpea protein.

Embodiment 64. The edible formulation of any one of the preceding Embodiments, wherein the vegetable protein includes lupin protein.

Embodiment 65. The edible formulation of Embodiment 64, wherein the vegetable protein mainly includes the lupin protein.

Embodiment 66. The edible formulation of any one of the preceding Embodiments, wherein the vegetable protein includes rice protein.

Embodiment 67. The edible formulation of Embodiment 66, wherein the vegetable protein mainly includes the rice protein.

Embodiment 68. The edible formulation of any one of the preceding Embodiments, wherein the vegetable protein includes lentil protein.

Embodiment 69. The edible formulation of Embodiment 68, wherein the vegetable protein mainly includes the lentil protein.

Embodiment 70. The edible formulation of any one of the preceding Embodiments, wherein the vegetable protein includes mung bean protein.

Embodiment 71. The edible formulation of Embodiment 70, wherein the vegetable protein mainly includes the mung bean protein.

Embodiment 72. The edible formulation of any one of the preceding Embodiments, wherein the vegetable protein includes zein protein.

Embodiment 73. The edible formulation of Embodiment 72, wherein the vegetable protein mainly includes the zein protein.

Embodiment 74. The edible formulation of any one of the preceding Embodiments, wherein the vegetable protein includes soybean protein.

Embodiment 75. The edible formulation of any one of Embodiments 21 to 74, wherein a weight-to-weight ratio of the first protein or the vegetable protein to the sweetener within the sweetener particles is within a range of 0.02% to 1.5%.

Embodiment 76. The edible formulation of any one of Embodiments 21 to 74, wherein the weight-to-weight ratio of the first protein or the vegetable protein within the sweetener particles is within a range of 0.005% to 0.7%.

Embodiment 77. The edible formulation of any one of the preceding Embodiments, wherein a total concentration of the sweetener, a or the at least one fat, and a or the at least one starch, within the edible formulation, is at least 30%, on a weight basis.

Embodiment 78. The edible formulation of any one of the preceding Embodiments, wherein a or the weight-to-weight ratio of the first protein or the vegetable protein to the sweetener within the sweetener particles is within a range of 0.03% to 0.7%.

Embodiment 79. The edible formulation of any one of the preceding Embodiments, wherein a or the weight content of the first protein or the vegetable protein within the edible formulation, on a dry basis, is within a range of 0.005% to 0.5%.

Embodiment 80. The edible formulation of any one of the preceding Embodiments, wherein an average particle size, by weight, of the sweetener particles within the edible formulation is at least 80 $\mu$ m.

Embodiment 81. The edible formulation of any one of the preceding Embodiments, wherein a or the mucosal adhesion of the edible formulation is greater than that of a control formulation, the control formulation being devoid of the first protein or the vegetable protein, but being otherwise identical to the edible formulation.

Embodiment 82. The edible formulation of any one of the preceding Embodiments, wherein a or the mucosal adhesion of the edible formulation is greater than that of a control formulation by a value of at least 10%, and optionally, at least 20%, at least 30%, at least 40%, at least 50%, at least 75%, or at least 100%, the control formulation being devoid of the first protein or the vegetable protein, but being otherwise identical to the edible formulation.

Embodiment 83. The edible formulation of any one of Embodiments 1 to 81, wherein a or the mucosal adhesion of the edible formulation is greater than that of a control formulation by a value of 5% to 200%, the control formulation being devoid of the first protein, but being otherwise identical to the edible formulation.

Embodiment 84. The edible formulation of Embodiment 83, wherein the mucosal adhesion of the edible formulation is greater than that of the control formulation by a value of 3% to 90%.

Embodiment 85. The edible formulation of Embodiment 83, wherein the mucosal adhesion of the edible formulation is greater than that of the control formulation by a value of 10% to 90%.

Embodiment 86. The edible formulation of Embodiment 81, wherein the mucosal adhesion of the edible formulation is greater than that of the control formulation by a value of 3% to 50%, 3% to 30%, 5% to 50%, 10% to 50%, 15% to 90%, 15% to 80%, 15% to 70%, 15% to 50%, 20% to 90%, 20% to 70%, 25% to 90%, or 25% to 70%.

Embodiment 87. The edible formulation of any one of Embodiment 85, wherein the mucosal adhesion of the edible formulation is greater than that of the control formulation by a value of 10% to 70%.

Embodiment 88. The edible formulation of any one of the preceding Embodiments, wherein the a value of the mucosal adhesion of the edible formulation is determined by a standard maximum detachment force determination.

Embodiment 89. The edible formulation of any one of the preceding Embodiments, wherein a or the mucosal adhesion of the edible formulation is determined by a standard work of detachment determination.

Embodiment 90. The edible formulation of any one of the preceding Embodiments, wherein a total weight content of the sweetener particles within the edible formulation is at least 5%.

Embodiment 91. The edible formulation of Embodiment 90, wherein the weight content of the sweetener is at least 8%.

Embodiment 92. The edible formulation of Embodiment 90, wherein the weight content of the sweetener is at least 10%.

Embodiment 93. The edible formulation of Embodiment 90, wherein the weight content of the sweetener is at least 15%.

Embodiment 94. The edible formulation of Embodiment 90, wherein the weight content of the sweetener is at least 20%.

Embodiment 95. The edible formulation of Embodiment 90, wherein the weight content of the sweetener is at least 25%.

Embodiment 96. The edible formulation of Embodiment 90, wherein the weight content of the sweetener is at least 30%.

Embodiment 97. The edible formulation of Embodiment 90, wherein the weight content of the sweetener is at least 40%.

Embodiment 98. The edible formulation of Embodiment 90, wherein the weight content of the sweetener is at least 50%.

Embodiment 99. The edible formulation of Embodiment 90, wherein the weight content of the sweetener is at least 65%.

Embodiment 100. The edible formulation of Embodiment 90, wherein the weight content of the sweetener is at least 75%.

Embodiment 101. The edible formulation of Embodiment 90, wherein the weight content of the sweetener is at least 85%.

Embodiment 102. The edible formulation of Embodiment 90, wherein the weight content of the sweetener is at least 90%.

Embodiment 103. The edible formulation of Embodiment 90, wherein the weight content of the sweetener is at least 95%.

Embodiment 104. The edible formulation of any one of the preceding Embodiments, wherein a total weight content of the sweetener particles within the edible formulation is within a range of 8% to 80%.

Embodiment 105. The edible formulation of Embodiment 104, wherein this total weight content is within a range of 10% to 70%.

Embodiment 106. The edible formulation of Embodiment 104, wherein this total weight content is within a range of 15% to 70%.

Embodiment 107. The edible formulation of any one of the preceding Embodiments, wherein the sweetener particles have an average particle size ($D_V50$) of at least $30\mu m$.

Embodiment 108. The edible formulation of Embodiment 107, wherein $D_V50$ is within a range of $30\mu m$ to $1500\mu m$.

Embodiment 109. The edible formulation of Embodiment 107 or 108, wherein $D_V50$ is at least $50\mu m$.

Embodiment 110. The edible formulation of Embodiment 109, wherein $D_V50$ is at least $100\mu m$.

Embodiment 111. The edible formulation of Embodiment 109, wherein $D_V50$ is at least $200\mu m$.

Embodiment 112. The edible formulation of Embodiment 109, wherein $D_V50$ is at least $350\mu m$.

Embodiment 113. The edible formulation of any one of the preceding Embodiments, wherein the weight-to-weight ratio of the at least one vegetable protein to the sweetener within the sweetener particles is within a range of 0.03% to 0.7%, 0.03% to 0.6%, 0.03% to 0.5%, 0.05% to 0.7%, 0.1% to 0.65%, 0.1% to 0.6%, 0.2% to 0.7%, 0.2% to 0.6%, 0.25% to 0.7%, or 0.25% to 0.6%.

Embodiment 114. The edible formulation of any one of the preceding Embodiments, wherein the weight-to-weight ratio of the at least one vegetable protein to the sweetener within the sweetener particles is within a range of 0.1% to 0.7%.

Embodiment 115. The edible (food) formulation of any one of the preceding Embodiments, wherein a or the weight content of the first protein within the edible formulation, on the dry basis, is at least 0.005%, at least 0.007%, at least 0.01%, at least 0.025%, at least 0.05%, at least 0.075%, at least 0.1%, at least 0.2%, or at least 0.3%, and at most 0.7%, or at most 0.6%.

Embodiment 116. The edible (food) formulation of any one of the preceding Embodiments, wherein a or the weight content of the first protein within the edible formulation, on the dry basis, is within a range of 0.005% to 0.45%.

Embodiment 117. The edible (food) formulation of Embodiment 116, wherein a or the weight content of the first protein within the edible formulation, on the dry basis, is within a range of 0.015% to 0.3%.

Embodiment 118. The edible (food) formulation of Embodiment 116, wherein a or the weight content of the first protein within the edible formulation, on the dry basis, is within a range of 0.015% to 0.1%.

Embodiment 119. The edible formulation of any one of the preceding Embodiments, wherein the sweetener carbohydrate is selected from at least one of the group consisting of sucrose, glucose, fructose, maltose, lactose, mannose, allulose, tagatose, xylose, galactose, arabinose, galactofructose.

Embodiment 120. The edible formulation of any one of the preceding Embodiments, wherein the sweetener carbohydrate includes sucrose.

Embodiment 121. The edible formulation of any one of the preceding Embodiments, wherein the sweetener carbohydrate includes or mainly includes glucose.

Embodiment 122. The edible formulation of any one of the preceding Embodiments, wherein the sweetener carbohydrate includes or mainly includes fructose.

Embodiment 123. The edible formulation of any one of the preceding Embodiments, wherein the sweetener polyol is a sugar alcohol.

Embodiment 124. The edible formulation of any one of the preceding Embodiments, including a sweetener polyol or further including the sweetener polyol, wherein the sweetener polyol is selected from at least one of the group consisting of xylitol, maltitol, erythritol, sorbitol, threitol, arabitol, hydrogenated starch hydrolysates (HSH), isomalt, lactitol, mannitol, and galactitol (dulcitol).

Embodiment 125. The edible formulation of any one of the preceding Embodiments, wherein the formulation is in the form of a particulate solid such as a powder, e.g., a free-flowing powder.

Embodiment 126. The edible formulation of any one of the preceding Embodiments, wherein a or the mucosal adhesion of the edible formulation is greater than that of a control formulation by a first value of at least 5%, the control formulation being devoid of the first protein, but being otherwise identical to the edible formulation, the mucosal adhesion of the edible formulation and of the control formulation being determined by a standard work of detachment determination.

Embodiment 127. The edible formulation of Embodiment 127, wherein the first value is at most 200%.

Embodiment 128. The edible formulation of Embodiment 127, wherein the first value is within a range of 5% to 180%.

Embodiment 129. The edible formulation of Embodiment 127, wherein the first value is within a range of 10% to 150%.

Embodiment 130. The edible formulation of Embodiment 127, wherein the first value is within a range of 10% to 125%.

Embodiment 131. The edible formulation of Embodiment 127, wherein the first value is within a range of 15% to 110%.

Embodiment 132. The edible formulation of Embodiment 127, wherein the first value is within a range of 5% to 150%, 5% to 125%, 10% to 100%, 10% to 80%, 15% to 125%, 20% to 180%, 20% to 150%, 20% to 125%, 20% to 100%, 20% to 80%, 30% to 150%, 30% to 125%, 30% to 100%, 30% to 80%, 40% to 150%, 40% to 125%, 40% to 100%, 40% to 80%, 50% to 150%, 50% to 125%, 50% to 100%, or 50% to 90%.

Embodiment 133. The edible formulation of any one of Embodiments 127 to 132, wherein the first value is at most 100%, at most 90%, at most 80%, at most 70%, at most 60%, at most 50%, or at most 40%.

Embodiment 134. The edible formulation of any one of the preceding Embodiments, wherein a or the mucosal adhesion of the edible formulation is greater than that of a control formulation by a second value of at least 3%, the control formulation being devoid of the first protein, but being otherwise identical to the edible formulation, the mucosal adhesion of the edible formulation and of the control formulation being determined by a standard maximum detachment force determination.

Embodiment 135. The edible formulation of Embodiment 134, wherein the second value is at most 150%.

Embodiment 136. The edible formulation of Embodiment 134, wherein the second value is within a range of 3% to 125%.

Embodiment 137. The edible formulation of Embodiment 134, wherein the second value is within a range of 5% to 125%.

Embodiment 138. The edible formulation of Embodiment 134, wherein the second value is within a range of 5% to 100%.

Embodiment 139. The edible formulation of Embodiment 134, wherein the second value is within a range of 5% to 75%.

Embodiment 140. The edible formulation of Embodiment 134, wherein the second value is within a range of 5% to 50%.

Embodiment 141. The edible formulation of Embodiment 134, wherein the second value is within a range of 5% to 35%.

Embodiment 142. The edible formulation of Embodiment 134, wherein the second value is within a range of 7% to 50%.

Embodiment 143. The edible formulation of Embodiment 134, wherein the second value is within a range of 7% to 25%.

Embodiment 144. The edible formulation of Embodiment 134, wherein the second value is within a range of 10% to 50%.

Embodiment 145. The edible formulation of Embodiment 134, wherein the second value is within a range of 3% to 100%, 3% to 60%, 3% to 40%, 7% to 100%, 7% to 80%, 7% to 70%, 7% to 60%, 7% to 40%, 8% to 60%, 8% to 40%, 8% to 30%, 10% to 80%, 10% to 60%, 10% to 35%, or 10% to 30%.

Embodiment 146. The edible formulation of any one of Embodiments 134 to 145, wherein the second value is at most 65%, at most 60%, at most 55%, at most 50%, at most 45%, at most 40%, at most 35%, at most 30%, at most 25%, or at most 20%.

Embodiment 147. The edible formulation of any one of the preceding Embodiments, wherein a or the mucosal adhesion of the edible formulation is greater than that of a control formulation by a first value of at least 5%, the control formulation being devoid of the first protein, but being otherwise identical to the edible formulation, the first value being determined by a standard work of detachment determination; and wherein a or the mucosal adhesion of the edible formulation is greater than that of the control formulation by a second value of at least 3%, the second value being determined by a standard maximum detachment force determination.

Embodiment 148. The edible formulation of Embodiment 147, wherein the first value is within a range of 5% to 150%, and wherein the second value is within a range of 3% to 75%.

Embodiment 149. The edible formulation of Embodiment 147, wherein the first value is within a range of 10% to 125%, and wherein the second value is within a range of 5% to 50%.

Embodiment 150. An edible formulation comprising:

(a) sweetener particles containing at least one sweetener selected from the group consisting of a sweetener carbohydrate and a sweetener polyol;

(b) a vegetable protein disposed within the sweetener particles;
(c) a fat;
(d) optionally, a starch; and
(e) optionally, an edible filler;

wherein a weight-to-weight ratio of the vegetable protein to the sweetener within the sweetener particles is within a range of 0.02% to 1.5%;
and wherein a total concentration of the sweetener, the fat, and the starch, within the edible formulation, is at least 30%, on a weight basis.

Embodiment 151. The edible formulation of any one of the preceding Embodiments, the edible formulation further comprising an or the edible filler.

Embodiment 152. The edible formulation of any one of the preceding Embodiments, wherein a concentration of an or the edible filler within the edible formulation is at least 3.5%.

Embodiment 153. The edible formulation of Embodiment 152, wherein the concentration of the edible filler is at least 5%.

Embodiment 154. The edible formulation of Embodiment 152, wherein the concentration of the edible filler is at least 7%, at least 10%, at least 12%, or at least 15%.

Embodiment 155. The edible formulation of Embodiment 152, wherein the concentration of the edible filler is within a range of 3% to 35%.

Embodiment 156. The edible formulation of Embodiment 152, wherein the concentration of the edible filler is within a range of 3% to 30%.

Embodiment 157. The edible formulation of Embodiment 152, wherein the concentration of the edible filler is within a range of 5% to 30%.

Embodiment 158. The edible formulation of Embodiment 152, wherein the concentration of the edible filler is within a range of 7% to 25%.

Embodiment 159. The edible formulation of Embodiment 152, wherein the concentration of the edible filler is within a range of 10% to 35%.

Embodiment 160. The edible formulation of Embodiment 152, wherein the concentration of the edible filler is within a range of 10% to 25%.

Embodiment 161. The edible formulation of Embodiment 152, wherein the concentration of the edible filler is within a range of 12% to 25%.

Embodiment 162. The edible formulation of Embodiment 152, wherein the concentration of the edible filler is within a range of 15% to 25%.

Embodiment 163. The edible formulation of any one of the preceding Embodiments, wherein an or the edible filler within the edible formulation is a soluble fiber.

Embodiment 164. The edible formulation of any one of the preceding Embodiments, wherein an or the edible filler within the edible formulation is a dietary fiber.

Embodiment 165. The edible formulation of Embodiment 164, wherein the dietary fiber is a soluble dietary fiber.

Embodiment 166. The edible formulation of any one of the preceding Embodiments, wherein an or the edible filler within the edible formulation is, or includes, a polysaccharide filler.

Embodiment 167. The edible formulation of Embodiment 166, wherein the polysaccharide filler is, or includes, a fructan.

Embodiment 168. The edible formulation of Embodiment 167, wherein the fructan is inulin.

Embodiment 169. The edible formulation of Embodiment 167, wherein the fructan includes inulin.

Embodiment 170. The edible formulation of any one of the preceding Embodiments, wherein an or the edible filler within the edible formulation is, or includes, an oligosaccharide.

Embodiment 171. The edible formulation of Embodiment 170, wherein the oligosaccharide is, or includes, a fructooligosaccharide.

Embodiment 172. The edible formulation of any one of the preceding Embodiments, wherein an or the soluble fiber within the edible formulation is, or includes, a resistant maltodextrin.

Embodiment 173. The edible formulation of any one of the preceding Embodiments, wherein an or the soluble fiber within the edible formulation is, or includes, soluble corn fiber.

Embodiment 174. The edible formulation of any one of the preceding Embodiments, wherein an or the soluble fiber within the edible formulation is, or includes, polydextrose.

Embodiment 175. The edible formulation of any one of the preceding Embodiments, wherein a total concentration of the sweetener and an or the fat is at least 10%, on a weight basis.

Embodiment 176. The edible formulation of Embodiment 175, wherein the total concentration of Embodiment 256 is at least 15%, on the weight basis.

Embodiment 177. The edible formulation of Embodiment 175, wherein the total concentration of Embodiment 256 is at least 20%, on the weight basis.

Embodiment 178. The edible formulation of Embodiment 175, wherein the total concentration of Embodiment 256 is at least 25%, at least 30%, or a least 40%, on the weight basis.

Embodiment 179. The edible formulation of any one of the preceding Embodiments, wherein a total concentration of the sweetener, an or the fat, and a or the starch within the edible formulation is at least 32%, on a weight basis. Embodiment 180. The edible formulation of Embodiment 179, wherein the total concentration of Embodiment 261 is at least 40%, on the weight basis.

Embodiment 181. The edible formulation of Embodiment 179, wherein the total concentration of Embodiment 261 is at least 50%, on the weight basis.

Embodiment 182. The edible formulation of Embodiment 179, wherein the total concentration of Embodiment 261 is at least 60%, on the weight basis.

Embodiment 183. The edible formulation of any one of the preceding Embodiments, wherein a total concentration of the sweetener, an or the fat, a or the starch, and a or the edible filler within the edible formulation is at least 50%, on a weight basis.

Embodiment 184. The edible formulation of Embodiment 183, wherein the total concentration of Embodiment 268 within the edible formulation is at least 55%.

Embodiment 185. The edible formulation of Embodiment 183, wherein the total concentration of Embodiment 268 is at least 65%.

Embodiment 186. The edible formulation of Embodiment 183, wherein the total concentration of Embodiment 268 within the edible formulation is at least 75%.

Embodiment 187. The edible formulation of any one of the preceding Embodiments, wherein a concentration of cocoa powder within the edible formulation is at least 2%.

Embodiment 188. The edible formulation of any one of the preceding Embodiments, containing at least 5% of the sweetener, at least 5% of a or the fat, and at least 5% of a or the starch.

Embodiment 189. The edible formulation of Embodiment 188, containing at least 2% of a or the edible filler.

Embodiment 190. The edible formulation of Embodiment 188 or Embodiment 278, containing at least 10% of the sweetener, at least 10% of a or the fat, and at least 10% of a or the starch.

Embodiment 191. The edible formulation of Embodiment 188, containing at least 5% of a or the edible filler.

Embodiment 192. The edible formulation of Embodiment 188, containing at least 8% of a or the edible filler.

Embodiment 193. The edible formulation of any one of the preceding Embodiments, wherein the vegetable protein makes up at least 40% of the first protein.

Embodiment 194. The edible formulation of Embodiment 193, wherein the vegetable protein makes up at least 60% of the first protein.

Embodiment 195. The edible formulation of Embodiment 193, wherein the vegetable protein makes up at least 80% of the first protein.

Embodiment 196. The edible formulation of Embodiment 193, wherein the vegetable protein makes up all of the first protein.

As used herein in the specification and in the claims section that follows, the term "vegetable protein" is meant to include any native, plant protein, including those typically found in legumes, cereals, oilseeds, nuts, edible seed, tubers, leaves and fruits. The term "vegetable protein" is also meant to include a non-native plant protein, including a denatured protein of the native protein, or, a modified protein of the native protein, as will be appreciated by those of skill in the art.
As used herein in the specification and in the claims section that follows, the term "vegetable protein" is further meant to include hydrolyzed vegetable proteins, for example, a pea protein hydrolyzate or a rice protein hydrolyzate.
"Native" proteins may possess all four levels of biomolecular structure, wherein the secondary through quaternary structure may be formed from weak interactions along the covalently-bonded backbone.
As used herein in the specification and in the claims section that follows, the term "integral protein" and the like refers to a non-hydrolyzed or at most partially hydrolyzed protein.
More specifically, as used herein in the specification and in the claims section that follows, the term "integral vegetable protein" and the like refers to a non-hydrolyzed or at most partially hydrolyzed vegetable protein.
For the avoidance of doubt, it is emphasized that the term "denatured protein" (or "denatured vegetable protein" and the like) does not include disruption to the primary protein structure, such as disruption to the sequence of amino acids held together by covalent peptide bonds.
It is further emphasized that the term "hydrolyzed protein", "fully hydrolyzed protein" (or the like) refers to protein structures that have undergone such disruption to the primary protein structure, such as disruption to the sequence of amino acids held together by covalent peptide bonds.
As used herein in the specification and in the claims section that follows, the term "a globulin" refers to at least one globulin within the globulin class.
As used herein in the specification and in the claims section that follows, the term "an albumin" refers to at least one albumin within the albumin family (typically 2S).
As used herein in the specification and in the claims section that follows, the term "a prolamin" refers to at least one prolamin within the prolamin family.
As used herein in the specification and in the claims section that follows, the term "a glutelin" refers to at least one prolamin within the glutelin family.
Similarly, as used herein in the specification and in the claims section that follows, the terms "a legumin", "a convicilin", "a vicilin" and the like, refer to at least one of such species within its particular family.
As used herein in the specification and in the claims section that follows, the term "mainly includes", with respect to a component within a formulation, refers to the major component within the formulation, on a weight basis.
As used herein in the specification and in the claims section that follows, the term "predominantly includes", with respect to a component within a formulation, refers to a weight content of at least at least 65%.

As used herein in the specification and in the claims section that follows, the term "starch" is meant to include edible starches that are used or may be used in foodstuffs. Typically, such starches include at least one of amylose and amylopectin, and more typically, both amylose and amylopectin. It will be appreciated that various modifications of starch may be made, in order to impart to a particular foodstuff, or to the starch therein, specific chemical and/or physical properties, including, by way of example, the prevention of gelling at cold temperatures, withstanding low pH, or resistance to high shear or to high temperatures.

Often, starch is present in an ingredient, e.g., flour. In white wheat flour, the starch content is typically about 68%. In oats, the starch content is typically about 58%.

In addition to including fats that are solid at room temperature (25°C), *e.g.,* beef fat, shortening, palm oil, and butter, as used herein in the specification and in the claims section that follows, the term "fat" is meant to include edible oils, including those that are liquid at room temperature, e.g., cooking oils. Specific examples of edible oils are olive oil, walnut oil, corn oil, and cottonseed oil.

Fats may be a separate ingredient, or may be an ingredient within a food ingredient. For example, hazelnut paste and cocoa powder both contain fat.

Average particle size (D50) may be based on the number of particles in the population ("$D_N50$") or may be based on the volume of particles ($D_V50$). These measurements may be obtained by various known methods including static light scattering (SLS), dynamic light scattering (DLS), sieving, and various methods of microscopy. Some methods may be preferred for larger ranges of particles, others may be preferred for smaller ranges of particles.

As used herein in the specification and in the claims section that follows, the term "percent", or "%", refers to percent by weight, unless specifically indicated otherwise. However, with specific regard to formulations containing at least one protein and at least one sweetener, the weight-percent of the protein is with respect to the sweetener. By way of example, in such a formulation containing 1.95 grams protein (e.g., in pea protein isolate) dispersed in a syrup containing 650 grams sucrose and 350 grams water, the weight-percent of protein is 1.95/650 = 0.3%.

As used herein in the specification and in the claims section that follows, the term "concentration" refers to concentration on a weight basis, unless specifically indicated otherwise.

The term "ratio", as used herein in the specification and in the claims section that follows, refers to a weight ratio, unless specifically indicated otherwise.

The modifier "about" and "substantially" used in connection with a quantity is inclusive of the stated value and has the meaning dictated by the context (for example, it includes at least the degree of error associated with the measurement of the particular quantity). When used with a specific value, it should also be considered as disclosing that value.

In the context of the present application and claims, the phrase "at least one of A and B" is equivalent to an inclusive "or", and includes any one of "only A", "only B", or "A and B". Similarly, the phrase "at least one of A, B, and C" is equivalent to an inclusive "or", and includes any one of "only A", "only B", "only C", "A and B", "A and C", "B and C", or "A and B and C".

It will be appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination.

**Claims**

1. An edible formulation comprising:

   (a) sweetener particles containing a sweetener selected from the group consisting of a sweetener carbohydrate and a sweetener polyol; and
   (b) a first protein disposed within said sweetener particles, said first protein including a vegetable protein;
   wherein a weight-to-weight ratio of said first protein to said sweetener within said sweetener particles is within a range of 0.02% to 0.7%;
   and wherein said sweetener within said sweetener particles is predominantly crystalline.

2. The edible formulation of claim **1,** wherein a mucosal adhesion of the edible formulation is greater than that of a control formulation, said control formulation being devoid of said first protein, but being otherwise identical to the edible formulation, said mucosal adhesion of the edible formulation exceeding that of said control formulation by 3% to 200%.

3. The edible formulation of claim 2, wherein said mucosal adhesion of the edible formulation exceeds that of said control formulation by at least 5% and by at most 40%.

4. The edible formulation of any one of the preceding claims, wherein said sweetener and said first protein make up at least 80% of the edible formulation.

5. The edible formulation of any one of the preceding claims, wherein said vegetable protein makes up at least 25% of said first protein.

6. The edible formulation of any one of the preceding claims, wherein the mucosal adhesion of the edible formulation is determined by at least one of a standard maximum detachment force determination and a standard work of detachment determination.

7. The edible formulation of any one of the preceding claims, wherein said sweetener includes sucrose.

8. The edible formulation of any one of the preceding claims, wherein said sweetener predominantly includes sucrose.

9. The edible formulation of any one of the preceding claims, wherein an average particle size, by weight, of the sweetener particles within the edible formulation is at least $80\mu m$.

10. A food formulation comprising:

   (a) the edible formulation of any one of claims 1 to 9; and additional ingredients including:
   (b) a fat;
   (c) optionally, a starch; and
   (d) optionally, an edible filler;

   wherein a weight content of said first protein within the food formulation, on a dry basis, is within a range of 0.01% to 0.5%.

11. The food formulation of claim 10, wherein a total concentration of said fat, said edible filler, said starch, and any one of the edible formulation, said sweetener, and said sweetener particles, within the food formulation, is at least 30%.

12. The food formulation of claim 11, wherein said total concentration is at least 60%.

13. The food formulation of any one of claims 10 to 12, containing at least 10% of said fat, at least 10% of said starch, at least 5% of said edible filler, and at least 8% of any one of the edible formulation, said sweetener, and said sweetener particles.

14. The food formulation of any one of claims 10 to 13, wherein a ratio of said sweetener in said sweetener particles to a total amount of sweetener in the food formulation is at least 50%, at least 65%, at least 75%, or at least 85%.

15. A method of producing the food formulation of any one of claims 10 to 14, the method comprising:

   (a) providing the edible formulation of any one of claims 1 to 9;
   (b) contacting the edible formulation with said additional ingredients; and
   (c) optionally subjecting the product of step (b) to an elevated temperature.

**Patentansprüche**

1. Essbare Formulierung, umfassend:

   (a) Süßerpartikel, die einen Süßer enthalten, der aus der Gruppe bestehend aus einem Süßerkohlenhydrat und einem Süßerpolyol ausgewählt ist; und
   (b) ein erstes Protein, das innerhalb der Süßerpartikel angeordnet ist, wobei das erste Protein ein pflanzliches Protein einschließt;
   wobei ein Gewichtsverhältnis des ersten Proteins zu dem Süßer innerhalb der Süßerpartikel innerhalb eines Bereichs von 0,02 % bis 0,7 % liegt;
   und wobei der Süßer innerhalb der Süßerpartikel überwiegend kristallin ist.

2. Essbare Formulierung nach Anspruch 1, wobei eine Schleimhauthaftung der essbaren Formulierung größer ist als diejenige einer Kontrollformulierung, wobei die Kontrollformulierung frei von dem ersten Protein ist, aber ansonsten mit der essbaren Formulierung identisch ist, wobei die Schleimhauthaftung der essbaren Formulierung diejenige der Kontrollformulierung um 3 % bis 200 % übersteigt.

3. Essbare Formulierung nach Anspruch 2, wobei die Schleimhauthaftung der essbaren Formulierung diejenige der Kontrollformulierung um mindestens 5 % und höchstens 40 % übersteigt.

4. Essbare Formulierung nach einem der vorhergehenden Ansprüche, wobei der Süßer und das erste Protein mindestens 80 % der essbaren Formulierung ausmachen.

5. Essbare Formulierung nach einem der vorhergehenden Ansprüche, wobei das pflanzliche Protein mindestens 25 % des ersten Proteins ausmacht.

6. Essbare Formulierung nach einem der vorhergehenden Ansprüche, wobei die Schleimhauthaftung der essbaren Formulierung durch mindestens eines von einer Bestimmung der maximalen Standardablösekraft und einer Bestimmung der Standardablösearbeit bestimmt wird.

7. Essbare Formulierung nach einem der vorhergehenden Ansprüche, wobei der Süßer Saccharose einschließt.

8. Essbare Formulierung nach einem der vorhergehenden Ansprüche, wobei der Süßer vorwiegend Saccharose einschließt.

9. Essbare Formulierung nach einem der vorhergehenden Ansprüche, wobei eine durchschnittliche Partikelgröße, bezogen auf das Gewicht, der Süßerpartikel innerhalb der essbaren Formulierung mindestens 80 μm beträgt.

10. Lebensmittelformulierung, umfassend:

   (a) die essbare Formulierung nach einem der Ansprüche 1 bis 9; und zusätzliche Bestandteile, die Folgendes einschließen:
   (b) ein Fett;
   (c) optional eine Stärke; und
   (d) optional einen essbaren Füllstoff;

wobei ein Gewichtsgehalt des ersten Proteins innerhalb der Lebensmittelformulierung auf Trockenbasis innerhalb eines Bereichs von 0,01 % bis 0,5 % liegt.

11. Lebensmittelformulierung nach Anspruch 10, wobei eine Gesamtkonzentration des Fetts, des essbaren Füllstoffs, der Stärke und eines beliebigen aus der essbaren Formulierung, dem Süßer und den Süßerpartikeln innerhalb der Lebensmittelformulierung mindestens 30 % beträgt.

12. Lebensmittelformulierung nach Anspruch 11, wobei die Gesamtkonzentration mindestens 60 % beträgt.

13. Lebensmittelformulierung nach einem der Ansprüche 10 bis 12, die mindestens 10 % des Fetts, mindestens 10 % der Stärke, mindestens 5 % des essbaren Füllstoffs und mindestens 8 % eines beliebigen aus der essbaren Formulierung, dem Süßer und den Süßerpartikeln enthält.

14. Lebensmittelformulierung nach einem der Ansprüche 10 bis 13, wobei ein Verhältnis des Süßers in den Süßerpartikeln zu einer Gesamtmenge an Süßer in der Lebensmittelformulierung mindestens 50 %, mindestens 65 %, mindestens 75 % oder mindestens 85 % beträgt.

15. Verfahren zum Herstellen der Lebensmittelformulierung nach einem der Ansprüche 10 bis 14, wobei das Verfahren Folgendes umfasst:

   (a) Bereitstellen der essbaren Formulierung nach einem der Ansprüche 1 bis 9;
   (b) Inkontaktbringen der essbaren Formulierung mit den zusätzlichen Bestandteilen; und
   (c) optional Unterziehen des Produkts aus Schritt (b) einer erhöhten Temperatur.

**Revendications**

1. Formulation comestible comprenant :

    (a) des particules d'édulcorant contenant un édulcorant choisi dans le groupe constitué par un glucide édulcorant et un polyol édulcorant ; et
    (b) une première protéine disposée au sein desdites particules d'édulcorant, ladite première protéine comprenant une protéine végétale ;
    dans laquelle le rapport poids/poids de ladite première protéine audit édulcorant au sein desdites particules d'édulcorant est compris au sein d'une plage de 0,02 % à 0,7 % ;
    et dans laquelle ledit édulcorant au sein desdites particules d'édulcorant est principalement cristallin.

2. Formulation comestible de la revendication 1, dans laquelle une adhésion muqueuse de la formulation comestible est supérieure à celle d'une formulation témoin, ladite formulation témoin étant dépourvue de ladite première protéine, mais étant par ailleurs identique à la formulation comestible, ladite adhésion muqueuse de la formulation comestible dépassant celle de ladite formulation témoin de 3 % à 200 %.

3. Formulation comestible de la revendication 2, dans laquelle ladite adhésion muqueuse de la formulation comestible dépasse celle de ladite formulation témoin d'au moins 5 % et d'au plus 40 %.

4. Formulation comestible de l'une quelconque des revendications précédentes, dans laquelle ledit édulcorant et ladite première protéine représente au moins 80 % de la formulation comestible.

5. Formulation comestible de l'une quelconque des revendications précédentes, dans laquelle ladite protéine végétale représente au moins 25 % de ladite première protéine.

6. Formulation comestible de l'une quelconque des revendications précédentes, dans laquelle l'adhésion muqueuse de la formulation comestible est déterminée par au moins l'une d'une détermination de force de détachement maximale standard et d'une détermination de travail de détachement standard.

7. Formulation comestible de l'une quelconque des revendications précédentes, dans laquelle ledit édulcorant comprend du saccharose.

8. Formulation comestible de l'une quelconque des revendications précédentes, dans laquelle ledit édulcorant comprend principalement du saccharose.

9. Formulation comestible de l'une quelconque des revendications précédentes, dans laquelle une taille moyenne de particules, en poids, des particules d'édulcorant au sein de la formulation comestible est d'au moins 80 $\mu$m.

10. Formulation alimentaire comprenant :

    (a) la formulation comestible de l'une quelconque des revendications 1 à 9 ; et des ingrédients supplémentaires comprenant :
    (b) une matière grasse ;
    (c) éventuellement, un amidon ; et
    (d) éventuellement, une charge comestible ;

    dans laquelle une teneur en poids de ladite première protéine au sein de la formulation alimentaire, sur une base sèche, est comprise au sein d'une plage de 0,01 % à 0,5 %.

11. Formulation alimentaire de la revendication 10, dans laquelle une concentration totale de ladite matière grasse, de ladite charge comestible, dudit amidon et de l'une quelconque de la formulation comestible, dudit édulcorant et desdites particules d'édulcorant, au sein de la formulation alimentaire, est d'au moins 30 %.

12. Formulation alimentaire de la revendication 11, dans laquelle ladite concentration totale est d'au moins 60 %.

13. Formulation alimentaire de l'une quelconque des revendications 10 à 12, contenant au moins 10 % de ladite matière grasse, au moins 10 % dudit amidon, au moins 5 % de ladite charge comestible et au moins 8 % de l'une quelconque

40

de la formulation comestible, dudit édulcorant et desdites particules d'édulcorant.

14. Formulation alimentaire de l'une quelconque des revendications 10 à 13, dans laquelle un rapport dudit édulcorant dans lesdites particules d'édulcorant à une quantité totale d'édulcorant dans la formulation alimentaire est d'au moins 50 %, au moins 65 %, au moins 75 % ou au moins 85 %.

15. Procédé de production de la formulation alimentaire de l'une quelconque des revendications 10 à 14, le procédé comprenant :

(a) la fourniture de la formulation comestible de l'une quelconque des revendications 1 à 9 ;
(b) la mise en contact de la formulation comestible avec lesdits ingrédients supplémentaires ; et
(c) éventuellement la soumission du produit de l'étape (b) à une température élevée.

## REFERENCES CITED IN THE DESCRIPTION

**Patent documents cited in the description**

- US 63253133
- US 63262172
- US 63316015
- US IB2022050065 W
- US IB2022057310 W
- US 2019343155 A
- US 2019021381 A
- US 2008213452 A1
- WO 2020182687 A

**Non-patent literature cited in the description**

- **MOSCOWITZ, H**. Ratio Scales of Sugar Sweetness. *Perception & Psychophysics*, 1970, vol. 7 (5)
- Sensory Evaluation Practices